# EUROPEAN PATENT SPECIFICATION

(11) **EP 2 921 504 B1**
(45) Date of publication and mention of the grant of the patent: **12.07.2017**
(21) Application number: 13855905.9
(22) Date of filing: 14.11.2013
(51) Int. Cl.: C08B 37/00

(54) **BETA-1,3-GLUCAN DERIVATIVE AND METHOD FOR PRODUCING BETA-1,3-GLUCAN DERIVATIVE**
BETA-1,3-GLUCAN-DERIVAT UND VERFAHREN ZUR HERSTELLUNG DES BETA-1,3-GLUCAN-DERIVATS
DÉRIVÉ DE BETA-1,3-GLUCANE ET PROCÉDÉ DE PRODUCTION DE DÉRIVÉ DE BETA-1,3-GLUCANE

(30) Priority: 14.11.2012 JP 2012250569
(43) Date of publication of application: 23.09.2015
(73) Proprietor: National Institute of Advanced Industrial Science and Technology, Tokyo 100-8921 (JP); University of Miyazaki, Miyazaki-shi Miyazaki 889-2192 (JP)
(72) Inventor: SHIBAKAMI Motonari, Tsukuba-shi Ibaraki 305-8566 (JP); TSUBOUCHI Gen, Tsukuba-shi Ibaraki 305-8566 (JP); HAYASHI Masahiro, Miyazaki-shi Miyazaki 889-2192 (JP)
(74) Representative: Conroy, John
(86) International application number: PCT/JP2013/080841
(87) International publication number: WO 2014/077340

(56) References cited:
- WO-A1-00/31144
- WO-A1-98/23648
- WO-A1-98/23648
- WO-A1-95/004083
- WO-A2-03/008457
- WO-A2-03/008457
- JP-A- H04 300 888
- JP-A- S61 152 701
- JP-A- S61 152 701
- JP-A- 2002 155 265
- JP-A- 2002 155 265
- JP-A- 2004 331 837
- YUI T ET AL: "Molecular and crystal structure of (1 -> 3)-alpha-d-glucan triacetate", INTERNATIONAL JOURNAL OF BIOLOGICAL MACROMOLECULES, ELSEVIER BV, NL, vol. 14, no. 2, 1 April 1992 (1992-04-01), pages 87-96, XP023459734, ISSN: 0141-8130, DOI: 10.1016/0141-8130(92)90004-R [retrieved on 1992-04-01]
- AKIHIRO KOGANEMARU ET AL: 'DEVELOPMENT OF A BIODEGRADABLE FILM USING PARAMYLON PREPARED FROM EUGLENA GRACILIS' JOURNAL OF THE SOCIETY OF FIBER SCIENCE AND TECHNOLOGY vol. 59, no. 11, 2003, pages 457 - 460, XP055260290
- KAWAHARA, Y. ET AL: 'DEVELOPMENT OF NOVEL FILM USING PARAMYLON PREPARED FROM EUGLENA GRACILIS' JOURNAL OF THE APPLIED POLYMER SCIENCE vol. 102, no. 4, 2006, pages 3495 - 3497, XP055260291
- WANG, P. ET AL: 'SYNTHESIS AND CHARACTERIZATION OF LONG-CHAIN FATTY ACID CELLULOSE ESTER (FACE)' JOURNAL OF APPLIED POLYMER SCIENCE vol. 52, no. 6, 1994, pages 755 - 761, XP000462045

## Description

### Technical Field

The present invention relates to a β-1,3-glucan derivative showing excellent thermoplasticity, which has glucan constituted of a β-1,3-glucoside bond as a main chain. The present invention further relates to a preparation method of the β-1,3-glucan derivative.

Priority is claimed on Japanese Patent Application No. 2012-250569, filed November 14, 2012, the content of which is incorporated herein by reference.

### Background Art

In recent years, plastics (bioplastics) made from a component derived from plants have attracted attention from the viewpoint of reducing environmental impact. And plastics having required characteristics such as biodegradability, moldability (thermoplasticity), and strength have been actively developed. For example, although plastics formed of polylactic acid have excellent biodegradability, there is still a lot of room for development of practical characteristics such as mechanical strength. Cellulose is biomass produced most largely on the ground. And cellulose is a main material that composes trees, and has a high potential as a structural material. However, it does not have thermoplasticity, and moldability thereof is very poor. It is considered that an intermolecular hydrogen bond between cellulose chains is a major factor to keep its rigid structure. Thus, weakening the intermolecular hydrogen bond would lead to acquisition of thermoplasticity. Therefore, a cellulose derivative having a weak intermolecular hydrogen bond and thermoplasticity, for examples, by introducing a long-chain alkyl group into cellulose acetate, has been developed.

β-1,3-Glucan, one of polysaccharides, is a natural polymer in which glucoses are linked by β-1,3 bonds. The difference in the molecular structure with cellulose is only a bonding mode between glucoses (glucoses are linked by β-1,4 bonds in cellulose). Although the structure of β-1,3-glucan is very similar to that of cellulose, β-1,3-glucan has a triple helix structure while cellulose has a sheet structure. In addition, generally, β-1,3-glucan easily dissolves in a solvent compared to cellulose.

β-1,3-Glucan is produced by mainly algae, fungi, or the like. As β-1,3-glucans produced by algae, laminaran which is a straight-chain polysaccharide including β-1,3 bonds and β-1,6 bonds, and schizophyllan which is a branched polysaccharide including β-1,3 bonds and β-1,6 bonds can be exemplified. As polysaccharides in which the main chain is formed of a β-1,3 bond, pachyman and lentinan can be exemplified, and it is known that pachyman has three to six side chains per a molecule (for example, refer to NPL 1), and lentinan has two side chain glucoses per five glucoses of the main chain (for example, refer to NPL 2), respectively. It is also known that curdlan has nearly a straight-chain form, and has one side chain per about 200 glucoses (for example, refer to NPLs 3 and 4). In contrast, paramylon, one of β-1,3-glucans, has a straight-chain form without a side chain glucose, and paramylon is synthesized and accumulated by Euglena, one of microalgae (for example, refer to NPLs 5 and 6). Paramylon is an energy storage material, and is present as an oval micro size particle (paramylon particle) in the cells of Euglena.

Similar to cellulose, paramylon also has been considered using as a plastic raw material. For example, a manufacturing method of a film by casting a formic acid solution of paramylon particles or the formic acid solution further including a predetermined amount of polyvinyl alcohol has been reported (for example, refer to PTL 1 and NPLs 7 and 8).

### Citation List

### Patent Literature

[PTL 1] Japanese Unexamined Patent Application, First Publication No. 2004-331837

### Non-Patent Literature

[NPL 1] Hoffmann et al., Carbohydrate Research, 1971, Vol. 20, pp. 185-188.
[NPL 2] Yoshizumi Satoshi et al., "Genealogy of sweetness and its science", published by Kohrin, 1986, p. 358.
[NPL 3] Saito et al., Agricultural and Biological Chemistry, 1968, Vol. 32, pp. 1261-1269.
[NPL 4] Harada et al., Archives of Biochemistry and Biophysics, 1968, Vol. 124, pp. 292-298.
[NPL 5] Kobayashi et al., Carbohydrate Polymers, 2010, Vol. 80, pp. 491-497.
[NPL 6] Clarke et al., Biochimica et Biophysica Acta, 1960, Vol. 44, pp. 161-163.
[NPL 7] Kawahara et al., Journal of Applied Polymer Science, 2006, Vol. 102, pp. 3495-3497.
[NPL 8] Koganemaru Akihiro et al., Journal of the Society of Fiber Science and Technology, 2003, Vol. 59, No. 11, pp. 457-460.

### Summary of Invention

### Technical Problem

Paramylon does not have thermoplasticity as well as cellulose. Thus, it has a problem of poor moldability. Actually, a paramylon film prepared by the method according to PTL 1 is hard and poor in breaking elongation.

An object of the invention is to provide a β-1,3-glucan derivative which is a polymer having β-1,3-glucan as a main chain and has favorable thermoplasticity and excellent moldability. And another object of the invention is to provide a preparation method of the β-1,3-glucan derivative.

### Solution to Problem

After comprehensive studies for solving the above problem, the present inventors found that a β-1,3-glucan derivative having thermoplasticity can be obtained, as a result of the weakened interaction between the polymer chains by acylation of the hydroxyl groups in glucose configuring β-1,3-glucan with a fatty acid or the like, and thus achieved the present invention.

The following [1] to [16] recites the β-1,3-glucan derivatives, the molded body, the preparation method of the β-1,3-glucan derivatives, and the manufacturing method of the molded body of the present invention.
[1] A β-1,3-glucan derivative represented by the following General Formula (1) as a main chain. 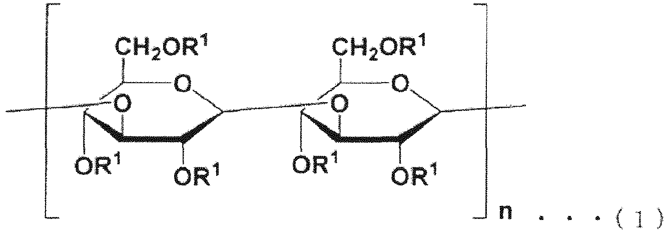 (In Formula (1), each of a plurality of R¹s independently represents a hydrogen atom or -COR², and n represents an integer of 1 or greater. R² represents an aliphatic hydrocarbon group or an aromatic hydrocarbon group. Provided that at least a part of a plurality of the R¹s is -COR².)
[2] The β-1,3-glucan derivative according to [1] which is a polymer represented by the following General Formula (1a). 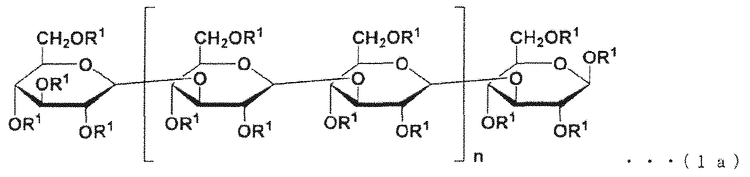 (In Formula (1a), each of a plurality of R¹s independently represents a hydrogen atom or -COR², and n represents an integer of 1 or greater. R² represents an aliphatic hydrocarbon group or an aromatic hydrocarbon group. Provided that at least a part of a plurality of the R¹s is -COR².)
[3] The β-1,3-glucan derivative according to [1] or [2], in which the number of -COR²s per glucose unit in the β-1,3-glucan derivative is 0.1 or greater.
[4] The β-1,3-glucan derivative according to [1] or [2], in which all of R¹s in General Formula (1) or General Formula (1a) are -COR²s.
[5] The β-1,3-glucan derivative according to any one of [1] to [4], in which at least a part of R²s in the β-1,3-glucan derivative is an aliphatic hydrocarbon group having 13 or more carbon atoms.
[6] The β-1,3-glucan derivative according to any one of [1] to [4], in which the number of -COR²¹s (R²¹ represents an aliphatic hydrocarbon group having 13 or more carbon atoms) per glucose unit in the β-1,3-glucan derivative is 0.1 or greater.
[7] The β-1,3-glucan derivative according to any one of [1] to [4], in which the number of -CH₂OCOR²¹s (R²¹ represents an aliphatic hydrocarbon group having 13 or more carbon atoms) per glucose unit in General Formula (1) or General Formula (1a) is 0.1 or greater.
[8] The β-1,3-glucan derivative according to any one of [1] to [7], in which at least a part of R²s in the β-1,3-glucan derivative is a short-chain aliphatic hydrocarbon group having 1 to 5 carbon atoms or a phenyl group.
[9] A molded body formed by molding the β-1,3-glucan derivative according to any one of [1] to [8].
[10] A manufacturing method of a molded body by molding the β-1,3-glucan derivative according to any one of [1] to [8].
[11] A preparation method of a β-1,3-glucan derivative, in which at least a part of hydroxyl groups in a polymer having glucan constituted of a β-1,3-glucoside bond as a main chain is acylated with a fatty acid.
[12] The preparation method of a β-1,3-glucan derivative according to [11], in which the fatty acid is a long-chain fatty acid having 13 or more carbon atoms.
[13] The preparation method of a β-1,3-glucan derivative according to [11], in which at least a part of hydroxyl groups in a polymer is acylated with a long-chain fatty acid having 13 or more carbon atoms, and then, at least a part of the hydroxyl groups remaining in the obtained β-1,3-glucan derivative is acylated with a short-chain fatty acid having 1 to 5 carbon atoms or benzoic acid.
[14] The preparation method of a β-1,3-glucan derivative according to any one of [11] to [13], in which the polymer is paramylon isolated from microalgae which synthesize β-1,3-glucan in cells.
[15] The preparation method of a β-1,3-glucan derivative according to [14], in which the microalgae are microalgae belonging to Euglenophyta.
[16] The preparation method of a β-1,3-glucan derivative according to any one of [11] to [15], in which the fatty acid is obtained by hydrolysis of a wax ester derived from plants.

### Advantageous Effects of Invention

The β-1,3-glucan derivative of the present invention is superior in thermoplasticity to natural β-1,3-glucan produced by Euglena or the like. Therefore, it is possible to more easily and efficiently manufacture a molded body by molding the β-1,3-glucan derivative of the present invention than natural β-1,3-glucan.

In addition, it is possible to prepare a β-1,3-glucan derivative having excellent thermoplasticity from β-1,3-glucan by the preparation method of the β-1,3-glucan derivative of the present invention.

### Description of Embodiments

### [β-1,3-Glucan Derivative]

The β-1,3-glucan derivative of the present invention is a polymer in which at least a part of hydroxyl groups in a polymer having β-1,3-glucan as a main chain is acylated. In other words, the β-1,3-glucan derivative of the present invention is a polymer in which at least a part of hydroxyl groups in glucose configuring a main chain of a polymer is acylated. The interaction by the hydrogen bond between the main chains is weakened by the acylation of hydroxyl groups. Due to this, the β-1,3-glucan derivative of the present invention is superior in thermoplasticity to a polymer without the acylation.

Specifically, the β-1,3-glucan derivative of the present invention has a structure represented by the following General Formula (1) as a main chain. In Formula (1), each of a plurality of R¹s independently represents a hydrogen atom or -COR², and R² represents an aliphatic hydrocarbon group or an aromatic hydrocarbon group (group consisting of carbon and hydrogen atoms). Here, at least a part of a plurality of the R¹s is -COR².

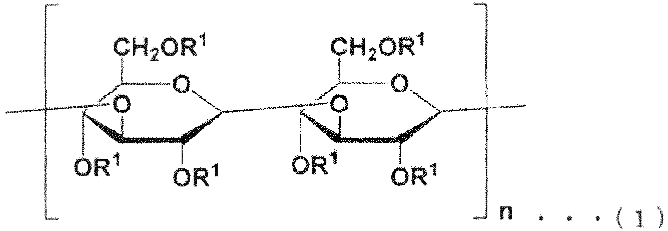

The aliphatic hydrocarbon group of R² may be a straight-chain hydrocarbon group, a branched-chain hydrocarbon group, or may have a cyclic hydrocarbon group. The interaction between the main chains can be weakened by any of the aliphatic hydrocarbon groups. In addition, in the case where the number of carbon atoms is two or more, the aliphatic hydrocarbon group may be an alkyl group formed by only carbon-carbon single bonds, or may be an alkenyl group or an alkynyl group including one or more double bonds or triple bonds. In General Formula (1), R² is preferably an alkyl group, more preferably a straight-chain or branched-chain alkyl group, and still more preferably a straight-chain alkyl group, from the viewpoint of ease of synthesis, high flexibility of a side chain, or the like.

Weakening effect of the interaction between the main chains is higher in the case where R² is a relatively bulky aliphatic hydrocarbon group than in the case where R² is a smaller hydrocarbon group. Therefore, R² is preferably an aliphatic hydrocarbon group having 11 or more carbon atoms (hereinafter, referred to as a long-chain hydrocarbon), and more preferably a long-chain hydrocarbon having 13 or more carbon atoms. The aliphatic hydrocarbon group (R²) is introduced by acylation of the hydroxyl groups of the main chain by a fatty acid as described below. And at this time, acylation efficiency tends to be decreased as the number of carbon atoms of the fatty acid is increased. Therefore, the number of carbon atoms of the aliphatic hydrocarbon group of R² is preferably 11 to 20, more preferably 13 to 20, still more preferably 13 to 18, and particularly preferably 13 to 17 as the structure represented by General Formula (1), from the viewpoint of an interaction-reducing effect between the main chains and acylation efficiency. Examples of the aliphatic hydrocarbon group having 11 to 20 carbon atoms include an undecyl group, a dodecyl group (lauryl group), a tridecyl group, a tetradecyl group (myristyl group), a pentadecyl group, a hexadecyl group (palmityl group), a heptadecyl group (cetyl group), an octadecyl group (stearyl group), a nonadecyl group, an eicosyl group, an undecenyl group, a dodecenyl group, a tridecenyl group, a tetradecenyl group, a pentadecenyl group, a hexadecenyl group, a heptadecenyl, an octadecenyl group (in particular, an oleyl group, a linoleic group), a nonadecenyl group, and an eicosenyl group. Among these, a tridecyl group, a tetradecyl group, a pentadecyl group, a hexadecyl group, or a heptadecyl group is preferable, and a tridecyl group, a pentadecyl group, or a heptadecyl group is more preferable.

In general, a branched-chain hydrocarbon group tends to be bulkier than a straight-chain hydrocarbon group in the case of the same number of carbon atoms. Therefore, a branched-chain hydrocarbon group is also preferable as R². In the case of a branched-chain hydrocarbon group, a hydrocarbon group having 8 to 11 carbon atoms (hereinafter, referred to as a branched medium-length chain hydrocarbon group) is also preferable in addition to a long-chain hydrocarbon group having 11 or more carbon atoms. Examples of the branched medium-length chain hydrocarbon group include a 1-ethylhexyl group, a 1-ethylheptyl group, a 1-ethyloctyl group, a 1-ethylnonyl group, a 1-propylpentyl group, a 1-propylhexyl group, a 1-propylheptyl group, a 1-propyloctyl group, a 1-butylpentyl group, a 1-butylhexyl group, a 1-butylheptyl group, a 2-ethylhexyl group, a 2-ethylheptyl group, a 2-ethyloctyl group, a 2-ethylnonyl group, a 2-propylpentyl group, a 2-propylhexyl group, a 2-propylheptyl group, and a 2-propyloctyl group.

Thermoplasticity is improved, even in the case where R² is a small aliphatic hydrocarbon group, for example, an aliphatic hydrocarbon group having 1 to 5 carbon atoms (hereinafter, referred to as a short-chain hydrocarbon group). Because the interaction by the hydrogen bond between the main chains is more weakened than in a natural β-1,3-glucan in which hydroxyl groups of the main chain are not completely acylated. Examples of the short-chain hydrocarbon group include a methyl group, an ethyl group, an n-propyl group, an i-propyl group, an n-butyl group, an i-butyl group, an s-butyl group, a t-butyl group, an n-pentyl group, a vinyl group, a 1-propenyl group, a 2-propenyl group, a 1-butenyl group, a 2-butenyl group, a 3-butenyl group, a 1-methyl-2-propenyl group, a 2-methyl-2-propenyl group, a 1-pentenyl group, a 2-pentenyl group, a 3-pentenyl group, a 4-pentenyl group, a 1-methyl-2-butenyl group, and a 2-methyl-2-butenyl group. Among these, a methyl group, an ethyl group, or a propyl group is preferable from the viewpoint of acylation efficiency.

In the case where R² is an aromatic hydrocarbon group, examples of the aromatic hydrocarbon group include a phenyl group and a naphthyl group. One or more hydrogen atoms in the aromatic ring may have been substituted with another functional group in the aromatic hydrocarbon group. Examples of the other functional group include an aliphatic hydrocarbon group having 1 to 6 carbon atoms and an alkoxy group having 1 to 6 carbon atoms.

The β-1,3-glucan derivative of the present invention can be a polymer having General Formula (1) as at least a part of the main chain, preferably, 80% or greater of the entire main chain. And the β-1,3-glucan derivative of the present invention may have side chains other than -COR². Examples of the β-1,3-glucan derivative having side chains include a polymer in which at least a part of the hydroxyl groups in a glucose unit of pachyman, lentinan, or curdlan is substituted with -OCOR².

As the β-1,3-glucan derivative of the present invention, a polymer in which the main chain is configured of the structure represented by General Formula (1) is preferable, that is, a polymer represented by the following General Formula (1a) is preferable. In General Formula (1a), R¹ and n are the same as those in General Formula (1). Examples of the polymer include a polymer in which at least a part of the hydroxyl groups in a glucose unit of straight-chain β-1,3-glucan such as paramylon is substituted with -OCOR².

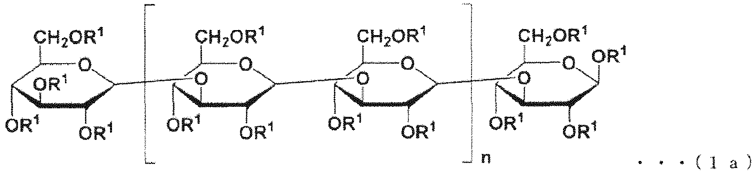

The ratio of -COR² with respect to all of R¹ in a β-1,3-glucan derivative (acylation ratio) can be represented by the number (substitution degree) of -COR² per a glucose unit. The maximum value of the substitution degree in glucose configuring the part other than both terminals of the main chain is theoretically "3", and the maximum value of the substitution degree in glucose configuring both terminals thereof is theoretically "4." The substitution degree of a β-1,3-glucan derivative can be measured by nuclear magnetic resonance spectroscopy (NMR method). For example, the substitution degree can be determined based on the integrated values of a signal of hydrogen atoms configuring the hydroxyl groups and -COR² in a glucose unit.

Thermoplasticity is improved as the acylation ratio is increased in the β-1,3-glucan derivative, due to the increased interaction-reducing effect between the main chains. In addition, water resistance is improved as hydroxyl groups are reduced by acylation. On the other hand, the mechanical strength of the obtained molded body tends to be decreased as the acylation ratio is increased. Therefore, the acylation ratio of the β-1,3-glucan derivative of the present invention is preferably and appropriately set in consideration of mechanical strength and moldability required for the derivative. For example, in the β-1,3-glucan derivative of the present invention, the substitution degree of -COR² is preferably 0.1 or greater, more preferably 0.2 or greater, still more preferably 0.5 or greater, further still more preferably 1.0 or greater, and particularly preferably 2.0 or greater. In addition, all of R¹s in General Formula (1) (or General Formula (1a)) may be -COR²s.

R²s in a plurality of -COR²s in the β-1,3-glucan derivative of the present invention may be the same aliphatic hydrocarbon group or different from each other. For example, the β-1,3-glucan derivative of the present invention may have only one type of long-chain hydrocarbon group, two or more types of long-chain hydrocarbon group, only one type of short-chain hydrocarbon group, or two or more types of short-chain hydrocarbon group as R².

In particular, the β-1,3-glucan derivative of the present invention preferably has one or more types of long-chain hydrocarbon group and one or more types of short-chain hydrocarbon group as R². In addition, the β-1,3-glucan derivative of the present invention also preferably has one or more types of long-chain hydrocarbon group and a phenyl group. It is preferable to reduce a number of the hydroxyl groups remaining in the β-1,3-glucan derivative since the interaction between the polymers can be decreased; however, the mechanical strength might become excessively low as the substitution degree of the long-chain hydrocarbon group is too large. A β-1,3-glucan derivative having excellent thermoplasticity (moldability) and mechanical strength, which are in a trade-off relationship, can easily be obtained by substituting the hydroxyl groups in β-1,3-glucan with both -COR² in which R² is a long-chain hydrocarbon group and -COR² in which R² is a short-chain hydrocarbon group or a phenyl group in a well-balanced manner.

The substitution degree of -COR² in which R² is a long-chain hydrocarbon group is preferably 0.1 or greater, more preferably 0.2 or greater, still more preferably 0.3 or greater, and particularly preferably 0.4 or greater from the viewpoint of obtaining a higher interaction-reducing effect between the main chains in the case of having a long-chain hydrocarbon group and a short-chain hydrocarbon group as R². In addition, the substitution degree of -COR² in which R² is a short-chain hydrocarbon group or a phenyl group is preferably 0.5 or greater, more preferably 1.0 or greater, and still more preferably 1.5 or greater from the viewpoint of sufficiently reducing the amount of residual hydroxyl group, and is preferably 2.5 or less, and more preferably 2.2 or less from the viewpoint of having a sufficient amount of long-chain hydrocarbon groups in the side chain.

In the β-1,3-glucan derivative represented by General Formula (1) or General Formula (1a), the primary hydroxyl groups are preferably substituted with long-chain hydrocarbon groups (in particular, long-chain hydrocarbon group having 13 or more carbon atoms). Higher thermoplasticity can be obtained by sufficiently introducing long-chain hydrocarbon groups into the primary hydroxyl groups. The number of -CH₂OCOR²¹ (R²¹ represents a long-chain hydrocarbon group having 13 or more carbon atoms) per glucose unit in General Formula (1) or General Formula (1a) is preferably 0.1 or greater in the β-1,3-glucan derivative of the present invention. In addition, among all -COR² in the β-1,3-glucan derivative, -COR² which was introduced into a primary hydroxyl group is preferably 50% or greater, more preferably 60% or greater, and still more preferably 70% or greater.

### [Preparation Method of β-1,3-Glucan Derivative]

The β-1,3-glucan derivative of the present invention can be prepared by acylation of at least a part of the hydroxyl groups in a polymer which has glucan constituted of a β-1,3-glucoside bond as a main chain with a fatty acid or an aromatic carboxylic acid. The polymer represented by General Formula (1a) can be prepared by using β-1,3-glucan without a side chain such as paramylon, as a raw material. β-1,3-glucan with a side chain may be used as a raw material. Examples of the β-1,3-glucan with a side chain include pachyman, lentinan, and curdlan.

The polymer used as a raw material may be a synthetic product; however, a polymer derived from organisms, particularly, a polymer derived from plants is preferably used as a raw material from the viewpoint of reducing environmental impact. Among these, β-1,3-glucan isolated from microalgae, which synthesize β-1,3-glucan in cells thereof, is preferably used as a raw material since β-1,3-glucan is easily isolated and collected.

Euglena (microalgae belonging to Euglenophyta) is preferable as the microalgae since Euglena can be easily cultivated, has a short growth cycle, and accumulates a large amount of paramylon particles in the cells as a photosynthetic product. Paramylon formed of 700 to 800 glucoses through β-1,3 bonding is Euglena typically synthesized and accumulated by Euglena.

Isolation of β-1,3-glucan such as paramylon from microalgae can be performed by a common technique. In addition, β-1,3-glucan such as paramylon is less likely to dissolve in common solvents such as water, however, β-1,3-glucan is soluble in an alkali aqueous solution, dimethyl sulfoxide (DMSO), formic acid, a DMSO-amine-based solvent, a dimethylformamide-chloral-pyridine-based solvent, a dimethylacetamide-lithium chloride-based solvent, or imidazolium-based ionic liquid.

In the acylation, the fatty acid represented by the following General Formula (2) (in Formula (2), R² is the same as that in General Formula (1)) can be used. The fatty acid may be a synthetic product; however, a fatty acid derived from organisms, particularly, a fatty acid derived from plants is preferably used from the viewpoint of reducing environmental impact.

**R²-COOH** ... (2)

In particular, a plant-based plastic (β-1,3-glucan derivative) containing a large amount of plant material can be produced by acylation of at least a part of the hydroxyl groups in paramylon isolated and collected from Euglena with a fatty acid obtained by hydrolysis of a wax ester produced by Euglena.

Paramylon can be acylated, for example, by a reaction with an acid chloride, an acid anhydride, or a vinyl compound of the fatty acid as an acylating agent in a solution in the presence of a Lewis acid such as lithium chloride or a base such as pyridine. The conditions such as the reaction temperature, the reaction time are set as appropriate in consideration of the type of acylating agent to be used, the desired substitution degree, and the like.

Examples of the acid chloride of fatty acid include acetyl chloride, butyric chloride, dodecanoyl chloride (lauroyl chloride), tetradecanoyl chloride (myristoyl chloride), hexadecanoyl chloride (palmitoyl chloride), octadecanoyl chloride (stearoyl chloride), hexadecenoyl chloride, octadecenoyl chloride (oleoyl chloride), octadecadienoyl chloride (linoleoyl chloride), and octadecatrienoyl chloride (linolenoyl chloride). Examples of the acid anhydride of the fatty acid include acetic anhydride, propionic anhydride, and butyric anhydride. Examples of the vinyl compound of fatty acid include vinyl acetate, vinyl propionate, vinyl dodecanoate (vinyl laurate), vinyl tetradecanoate (vinyl myristate), vinyl hexadecanoate (vinyl palmitate), vinyl octadecanoate (vinyl stearate), vinyl hexadecenoate, vinyl octadecenoate (vinyl oleate), vinyl octadecadienoate (vinyl linoleate), and vinyl octadecatrienoate (vinyl linolenate).

A β-1,3-glucan derivative having one or more types of long-chain hydrocarbon group and one or more types of short-chain hydrocarbon group or a phenyl group as R² is preferably synthesized by acylation of at least a part of the hydroxyl groups in a polymer such as paramylon with a long-chain hydrocarbon group, followed by acylation of at least a part of the hydroxyl groups remaining in the obtained β-1,3-glucan derivative with a short-chain fatty acid or benzoic acid. Long-chain hydrocarbon groups are easily and sufficiently introduced into primary hydroxyl groups by acylation with a long-chain hydrocarbon group in advance.

The load ratio ([acid chloride of a long-chain fatty acid (mole)] / [glucose unit in a polymer (mole)]) of the acid chloride of a long-chain fatty acid and the glucose unit in a polymer used as a raw material is preferably 1.5 to 4.0, more preferably 2.0 to 3.5, and still more preferably 2.5 to 3.0 in the case of synthesizing a β-1,3-glucan derivative having only a long-chain hydrocarbon group as R². A β-1,3-glucan derivative, which has thermoplasticity and a suitable viscosity at which molding using an injection molding machine is possible, can be easily obtained within the above range.

In addition, n is an integer of 1 or greater in General Formula (1). The numerical value of n is not particularly limited as long as the β-1,3-glucan derivative of the present invention has enough thermoplasticity. The mass-average molecular weight (Mw) of the β-1,3-glucan derivative of the present invention is preferably within 5.0 x 10⁴ to 1.0 x 10⁶, more preferably 10.0 x 10⁴ to 1.0 x 10⁶, and still more preferably 15.0 x 10⁴ to 1.0 x 10⁶.

### [Molded Body and Manufacturing Method Thereof]

β-1,3-Glucan derivatives prepared by the preparation method of the β-1,3-glucan derivatives including the β-1,3-glucan derivative of the present invention are polymers having thermoplasticity. A molded body of the polymers can be manufactured by molding by various molding methods as well as other thermoplastic resins. The molded body can be appropriately manufactured by molding methods commonly used for molding thermoplastic resins such as a casting method, an injection molding method, a compression method, and an inflation method.

A molded body manufactured by a casting method (method described in PTL 1) from a solution of natural paramylon is impractical since paramylon is more or less depolymerized in the solution, and thus the obtained molded body has low mechanical strength. In contrast, the β-1,3-glucan derivative of the present invention has improved thermoplasticity without excessively sacrificing the mechanical strength by appropriately adjusting the type or the combination of fatty acid used for acylation or respective substitution degrees.

In addition, although cellulose derivatives such as acylated cellulose have thermoplasticity, a relatively large amount of plasticizer is required for melt spinning. In contrast, β-1,3-glucan derivatives prepared by the preparation method of the present invention including the β-1,3-glucan derivative of the present invention are capable of melt spinning without a plasticizer.

The molded body of the present invention may be molded from only a β-1,3-glucan derivative of the present invention, or may be molded from a composition including a β-1,3-glucan derivative of the present invention and other components. Examples of other components include various additives generally added to a resin composition, such as a filler, an antioxidant, a release agent, a colorant, a dispersant, a flame retardant auxiliary agent, and a flame retardant. In addition, the molded body can be manufactured from a composition with other resins such as polyvinyl alcohol.

### [Examples]

Hereinafter, the present invention will be described in more detail with reference to Examples, but the present invention is not limited to these Examples.

### [Example 1]

Various acylated paramylon derivatives were prepared by acylation of paramylon, a polysaccharide derived from alga Euglena gracilis having excellent productivity, using a fatty acid having different numbers of carbon atoms, and various properties thereof were compared.

### (Preparation Example 1) Preparation of Myristoyl Group-Introduced Paramylon (paramylon derivative obtained by myristoylation of paramylon)

Paramylon (1.04 g), lithium chloride (815 mg), and N,N-dimethylacetamide (DMAc) (50 mL) were put into a 500 mL three-necked flask, followed by stirring at 120°C in a nitrogen atmosphere. The solution in the three-necked flask became transparent about 1 hour after the stirring was started. After the temperature of the transparent solution was cooled to room temperature, triethylamine (0.9 mL) was added thereto, then, a DMAc (50 mL) solution of myristoyl chloride (0.84 mL) was added dropwise thereto, and the solution was allowed to react by being stirred in a nitrogen atmosphere while heating to 120°C. After 4 hours, methanol (200 mL) was added to the reaction solution in the three-necked flask, and as a result, a white precipitate was produced. The supernatant was removed from the reaction solution by a centrifugal separation treatment, whereby a white precipitate was obtained. The white precipitate was washed with methanol (120 mL) 3 times and collected by suction filtration, and the resultant product was dried by heating (at 80°C, for 3 hours) under reduced pressure, whereby a target product (myristoyl group-introduced paramylon, hereinafter, referred to as "Derivative 1 (Myr)") was obtained.

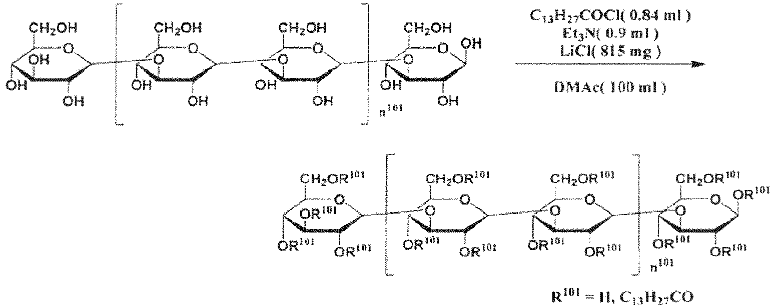

FT-IR (Fourier-transform infrared spectroscopy) measurement result of Derivative 1 (Myr) is shown below.
FT-IR(cm⁻¹): 3380(b), 2914(s), 2848(s), 1720(s), 1605(s).

### (Preparation Example 2) Preparation of Myristoyl Group/Acetyl Group-Introduced Paramylon (paramylon derivative obtained by acetylation of myristoyl group-introduced paramylon)

The derivative 1 (Myr) (1.21 g) obtained in Preparation Example 1, lithium chloride (687 mg), and DMAc (150 mL) were put into a 500 mL recovery flask, followed by stirring at 120°C for 1 hour in a nitrogen atmosphere. After stirring, the temperature of the solution which became homogeneous was cooled to 70°C, then, pyridine (16.8 mL) and acetic anhydride (24 mL) were added to the solution, and the resultant mixture was allowed to react by being stirred for 6 hours in a nitrogen atmosphere and at room temperature for 17 hours. After the reaction was completed, distilled water (200 mL) was added to the reaction solution, as a result, a white precipitate was produced, and suction filtration was performed, whereby a white precipitate was obtained. The white precipitate was washed with water (200 mL) and methanol (100 mL), and dried by heating (at 80°C, overnight) under reduced pressure, whereby a target product (paramylon derivative obtained by acetylation of myristoyl group-introduced paramylon, hereinafter, referred to as "Derivative 2 (Myr-Ac)") (1.39 g) was obtained.

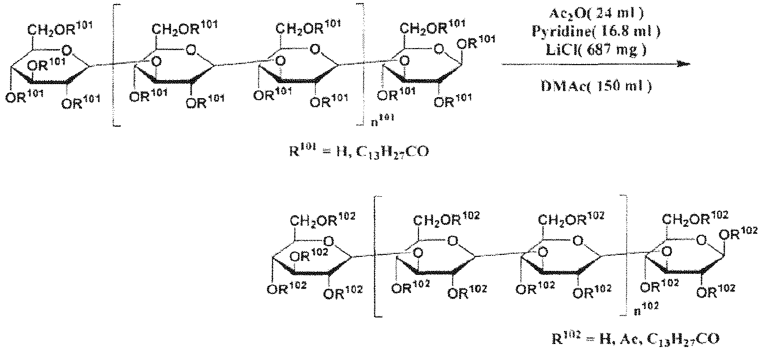

¹H-NMR and FT-IR measurement results of Derivative 2 (Myr-Ac) are shown below.
¹H-NMR(δ): 4.95-4.70 (m,2H), 4.47-4.15 (m,2H), 4.13-3.87 (br,1H), 3.81-3.43 (m,2H), 2.06 (t,J=24.3Hz), 1.60-1.55 (m), 1.26 (s), 0.88 (t,J=6.4). FT-IR(cm⁻¹): 1735(s).

### (Preparation Example 3) Preparation of Myristoyl Group-Introduced Paramylon

A target product (myristoyl group-introduced paramylon, hereinafter, referred to as "Derivative 3 (Myr)") was obtained in the same manner as in Preparation Example 1 except that 1.3 mL of triethylamine was added and 1.7 mL of myristoyl chloride was added.

FT-IR measurement result of Derivative 3 (Myr) is shown below.
FT-IR(cm⁻¹): 3047(b), 2919(s), 2851(s), 1735(s).

### (Preparation Example 4) Preparation of Myristoyl Group/Acetyl Group-Introduced Paramylon

A target product (paramylon derivative obtained by acetylation of myristoyl group-introduced paramylon, hereinafter, referred to as "Derivative 4 (Myr-Ac)") (1.30 g) was obtained in the same manner as in Preparation Example 2 except that Derivative 3 (Myr) obtained in Preparation Example 3 was used instead of Derivative 1 (Myr).

¹H-NMR and FT-IR measurement results of Derivative 4 (Myr-Ac) are shown below.
¹H-NMR(δ): 5.03-4.65 (m,2H), 4.53-4.15 (m,2H), 4.13-3.90 (br,1H), 3.85-3.35 (m,2H), 2.12 (s), 2.06 (s), 2.00 (s), 1.73-1.68 (m), 1.26 (s), 0.88 (t,J=6.9). FT-IR(cm⁻¹): 1740(s).

### (Preparation Example 5) Preparation of Myristoyl Group-Introduced Paramylon

A target product (myristoyl group-introduced paramylon, hereinafter, referred to as "Derivative 5 (Myr)") was obtained in the same manner as in Preparation Example 1 except that 2.6 mL of triethylamine and 3.3 mL of myristoyl chloride were added.

FT-IR measurement result of Derivative 5 (Myr) is shown below.
FT-IR(cm⁻¹): 3416(b), 2917(s), 2850(s), 1740(s).

### (Preparation Example 6) Preparation of Myristoyl Group/Acetyl Group-Introduced Paramylon

A target product (paramylon derivative obtained by acetylation of myristoyl group-introduced paramylon, hereinafter, referred to as "Derivative 6 (Myr-Ac)") (1.43 g) was obtained in the same manner as in Preparation Example 2 except that Derivative 5 (Myr) obtained in Preparation Example 5 was used instead of Derivative 1 (Myr).

¹H-NMR and FT-IR measurement results of Derivative 6 (Myr-Ac) are shown below.
¹H-NMR(δ): 5.10-4.53 (m,2H), 4.52-4.12 (m,2H), 4.11-3.86 (br,1H), 3.84-3.23 (m,2H), 2.11 (s), 2.05 (s), 1.98 (s), 1.73-1.68 (m), 1.26 (s), 0.88 (t,J=6.6). FT-IR(cm⁻¹): 2914(s), 2847(s), 1740(s).

### (Preparation Example 7) Preparation of Palmitoyl Group-Introduced Paramylon

A target product (palmitoyl group-introduced paramylon, hereinafter, referred to as "Derivative 7 (Pam)") was obtained in the same manner as in Preparation Example 1 except that palmitoyl chloride was used instead of myristoyl chloride, and 0.94 mL of the palmitoyl chloride was added.

FT-IR measurement result of Derivative 7 (Pam) is shown below.
FT-IR(cm⁻¹): 3365(b), 2918(s), 2850(s), 1732(s).

### (Preparation Example 8) Preparation of Palmitoyl Group/Acetyl Group-Introduced Paramylon

A target product (paramylon derivative obtained by acetylation of palmitoyl group-introduced paramylon, hereinafter, referred to as "Derivative 8 (Pam-Ac)") (1.17 g) was obtained in the same manner as in Preparation Example 2 except that Derivative 7 (Pam) obtained in Preparation Example 7 was used instead of Derivative 1 (Myr).

¹H-NMR and FT-IR measurement results of Derivative 8 (Pam-Ac) are shown below.
¹H-NMR(δ): 4.94-4.73 (m,2H), 4.45-4.13 (m,2H), 4.08-3.87 (br,1H), 3.79-3.45 (m,2H), 2.12 (s), 2.06 (s), 2.00 (s), 1.60-1.55 (m), 1.26 (s), 0.88 (t,J=6.9). FT-IR(cm⁻¹):1737(s)

### (Preparation Example 9) Preparation of Palmitoyl Group-Introduced Paramylon

A target product (palmitoyl group-introduced paramylon, hereinafter, referred to as "Derivative 9 (Pam)") was obtained in the same manner as in Preparation Example 1 except that palmitoyl chloride was used instead of myristoyl chloride, and 1.3 mL of triethylamine and 1.9 mL of palmitoyl chloride were added.

FT-IR measurement result of Derivative 9 (Pam) is shown below.
FT-IR(cm⁻¹): 3402(b), 2917(s), 2850(s), 1720(s).

### (Preparation Example 10) Preparation of Palmitoyl Group/Acetyl Group-Introduced Paramylon

A target product (paramylon derivative obtained by acetylation of palmitoyl group-introduced paramylon, hereinafter, referred to as "Derivative 10 (Pam-Ac)") (1.54 g) was obtained in the same manner as in Preparation Example 2 except that Derivative 9 (Pam) obtained in Preparation Example 9 was used instead of Derivative 1 (Myr).

¹H-NMR and FT-IR measurement results of Derivative 10 (Pam-Ac) are shown below.
¹H-NMR(δ): 5.05-4.51 (m,2H), 4.50-4.14 (m,2H), 4.13-3.90 (br,1H), 3.80-3.20 (m,2H), 2.12 (s), 2.06 (s), 2.00 (s), 1.61-1.58 (m), 1.26 (s), 0.88 (t,J=6.9). FT-IR(cm⁻¹): 2905(s), 2845(s), 1740(s).

### (Preparation Example 11) Preparation of Palmitoyl Group-Introduced Paramylon

A target product (palmitoyl group-introduced paramylon, hereinafter, referred to as "Derivative 11 (Pam)") was obtained in the same manner as in Preparation Example 1 except that palmitoyl chloride was used instead of myristoyl chloride, and 2.6 mL of triethylamine and 3.8 mL of palmitoyl chloride were added.

FT-IR measurement result of Derivative 11 (Pam) is shown below.
FT-IR(cm⁻¹):3424(b), 2918(s), 2850(s), 1728(s).

### (Preparation Example 12) Preparation of Palmitoyl Group/Acetyl Group-Introduced Paramylon

A target product (paramylon derivative obtained by acetylation of palmitoyl group-introduced paramylon, hereinafter, referred to as "Derivative 12 (Pam-Ac)") (1.61 g) was obtained in the same manner as in Preparation Example 2 except that Derivative 11 (Pam) obtained in Preparation Example 11 was used instead of Derivative 1 (Myr).

¹H-NMR and FT-IR measurement results of Derivative 12 (Pam-Ac) are shown below.
¹H-NMR(δ): 5.18-4.57 (m,2H), 4.55-4.12 (m,2H), 4.11-3.87 (br,1H), 3.85-3.20 (m,2H), 2.12 (s), 2.00 (s), 1.99 (s), 1.77-1.73 (m), 1.26 (s), 0.88 (t,J=6.6). FT-IR(cm⁻¹): 2919(s), 2848(s), 1741(s).

### (Preparation Example 13) Preparation of Stearoyl Group-Introduced Paramylon

A target product (stearoyl group-introduced paramylon, hereinafter, referred to as "Derivative 13 (Ste)") was obtained in the same manner as in Preparation Example 1 except that stearoyl chloride was used instead of myristoyl chloride, and 1.1 mL of the stearoyl chloride was added.

FT-IR measurement result of Derivative 13 (Ste) is shown below.
FT-IR(cm⁻¹): 3330(b), 2915(s), 2848(s), 1720(s).

### (Preparation Example 14) Preparation of Stearoyl Group/Acetyl Group-Introduced Paramylon

A target product (paramylon derivative obtained by acetylation of stearoyl group-introduced paramylon, hereinafter, referred to as "Derivative 14 (Ste-Ac)") (1.71 g) was obtained in the same manner as in Preparation Example 2 except that Derivative 13 (Ste) obtained in Preparation Example 13 was used instead of Derivative 1 (Myr).

¹H-NMR and FT-IR measurement results of Derivative 14 (Ste-Ac) are shown below.
¹H-NMR(δ): 5.02-4.60 (m,2H), 4.49-4.13 (m,2H), 4.10-3.91 (br,1H), 3.83-3.25 (m,2H), 2.12 (s), 2.06 (s), 2.00 (s), 1.60-1.55 (m), 1.26 (s), 0.88 (t,J=6.6). FT-IR(cm⁻¹): 2913(s), 2844(s), 1739(s).

### (Preparation Example 15) Preparation of Stearoyl Group-Introduced Paramylon

A target product (stearoyl group-introduced paramylon, hereinafter, referred to as "Derivative 15 (Ste)") was obtained in the same manner as in Preparation Example 1 except that stearoyl chloride was used instead of myristoyl chloride, and 1.3 mL of triethylamine and 2.1 mL of stearoyl chloride were added.

FT-IR measurement result of Derivative 15 (Ste) is shown below.
FT-IR(cm⁻¹): 3393(b), 2914(s), 2848(s), 1719(s).

### (Preparation Example 16) Preparation of Stearoyl Group/Acetyl Group-Introduced Paramylon

A target product (paramylon derivative obtained by acetylation of stearoyl group-introduced paramylon, hereinafter, referred to as "Derivative 16 (Ste-Ac)") (1.53g) was obtained in the same manner as in Preparation Example 2 except that Derivative 15 (Ste) obtained in Preparation Example 15 was used instead of Derivative 1 (Myr).

¹H-NMR and FT-IR measurement results of Derivative 16 (Ste-Ac) are shown below.
¹H-NMR(δ): 5.02-4.68 (m,2H), 4.52-4.17 (m,2H), 4.11-3.91 (br,1H), 3.83-3.40 (m,2H), 2.12 (s), 2.06 (s), 2.00 (s), 1.65-1.53 (m), 1.26 (s), 0.88 (t,J=6.9). FT-IR(cm⁻¹): 2917(s), 2851(s), 1738(s).

### (Preparation Example 17) Preparation of Stearoyl Group-Introduced Paramylon

A target product (stearoyl group-introduced paramylon, hereinafter, referred to as "Derivative 17 (Ste)") was obtained in the same manner as in Preparation Example 1 except that stearoyl chloride was used instead of myristoyl chloride, and 2.6 mL of triethylamine and 4.2 mL of stearoyl chloride were added.

FT-IR measurement result of Derivative 17 (Ste) is shown below.
FT-IR(cm⁻¹): 3396(b), 2917(s), 2849(s), 1725(s).

### (Preparation Example 18) Preparation of Stearoyl Group/Acetyl Group-Introduced Paramylon

A target product (paramylon derivative obtained by acetylation of stearoyl group-introduced paramylon, hereinafter, referred to as "Derivative 18 (Ste-Ac)") (1.63 g) was obtained in the same manner as in Preparation Example 2 except that Derivative 17 (Ste) obtained in Preparation Example 17 was used instead of Derivative 1 (Myr).

¹H-NMR and FT-IR measurement results of Derivative 18 (Ste-Ac) are shown below.
¹H-NMR(δ): 5.07-4.63 (m,2H), 4.52-4.15 (m,2H), 4.11-3.88 (br,1H), 3.83-3.35 (m,2H), 2.11 (s), 2.05 (s), 1.98 (s), 1.65-1.53 (m), 1.25 (s), 0.87 (t,J=6.9). FT-IR(cm⁻¹): 2918(s), 2851(s), 1742(s).

### (Measurement of Glass Transition Temperature by DSC Measurement)

DSC measurement (differential scanning calorimetry) was performed on each derivative synthesized in Preparation Examples 2, 4, 6, 8, 10, 12, 14, 16, and 18 under the following conditions, and the glass transition point (Tg) thereof was measured.

Used equipment: Thermoplus EVO II / DSC8230 (manufactured by Rigaku Corporation),
Temperature raising rate: 10°C/min,
Nitrogen flow: 100 mL/min.

### (Measurement of Mechanical Properties Using Universal Tester)

Respective mechanical properties of a cast film manufactured from each derivative synthesized in Preparation Examples 2, 4, 6, 8, 10, 12, 14, 16, and 18 were measured by using a universal tester.

The cast film was manufactured by putting a chloroform solution of a derivative (about 1 g) into a vat made of Teflon (registered trademark) and air-drying.

The obtained cast film was cut into a dumbbell shape, and a load at break (N), elastic modulus (MPa), and a stress at break (MPa) were measured by using a universal tester (apparatus name: Tensilon RTG-1225, manufactured by A & D Co., Ltd.). Specifically, the load at break, the elastic modulus, and the stress at break were measured by pulling the dumbbell type film at a speed of 7 mm/min at room temperature using a load cell of 50 N. The average value and the SD were determined by independent three times measurements with respect to one derivative.

The measurement results of the substitution degree, the glass transition point (Tg), the load at break, the elastic modulus, and the stress at break of each derivative are shown in Table 1. In Table 1, the upper part of the "Substitution degree" column indicates the substitution degree of a myristoyl group, a palmitoyl group, or a stearoyl group of each derivative, and the lower part indicates the substitution degree of an acetyl group. The substitution degree was calculated from the integrated value of ¹H-NMR.

**[Table 1]**

| | Substitution degree | Tg (°C) | Load at break (N) | Elastic modulus (MPa) | Stress at break (MPa) |
|---|---|---|---|---|---|
| Derivative 2 (Myr-Ac) | 0.25 | 123.7 | 4.9 ± 0.6 | 1442.1 ± 85.8 | 29.5 ± 4.3 |
| | 2.41 | | | | |
| Derivative 4 (Myr-Ac) | 0.37 | 120.7 | 5.7 ±1.8 | 1227.5 ± 59.2 | 18.6 ± 4.0 |
| | 2.47 | | | | |
| Derivative 6 (Myr-Ac) | 1.34 | 110.6 | 2.2 ± 0.5 | 434.3 ± 28.7 | 14.8 ± 3.4 |
| | 1.60 | | | | |
| Derivative 8 (Pam-Ac) | 0.21 | 135.2 | 6.8 ± 1.3 | 1766.2 ± 191.0 | 45.6 ± 9.3 |
| | 2.65 | | | | |
| Derivative 10 (Pam-Ac) | 0.41 | 126.6 | 6.8 ± 2.0 | 579.4 ± 81.6 | 10.5 ± 3.5 |
| | 2.18 | | | | |
| Derivative 12 (Pam-Ac) | 0.80 | 109.6 | 2.8 ± 0.7 | 538.1 ± 48.9 | 14.7 ± 2.5 |
| | 1.79 | | | | |
| Derivative 14 (Ste-Ac) | 0.20 | 136.8 | 5.5 ± 0.8 | 1468.9 ± 27.3 | 32.0 ± 4.1 |
| | 2.68 | | | | |
| Derivative 16 (Ste-Ac) | 0.34 | 120.0 | 5.1 ± 1.8 | 967.7 ± 234.7 | 16.1 ± 7.2 |
| | 2.44 | | | | |
| Derivative 18 (Ste-Ac) | 0.66 | 113.7 | 3.8 ± 0.5 | 931.9 ± 44.8 | 26.4 ± 3.56 |
| | 2.01 | | | | |

The load at break, the elastic modulus, and the stress at break tend to decrease as a derivative had a higher substitution degree, regardless of the kind of the introduced acyl group. In addition, comparing the derivatives having the same kind of acyl group, the elastic modulus and mechanical strength are high as a derivative had a lower substitution degree of a long-chain acyl group.

Paramylon does not have thermoplasticity. Actually, the film obtained by casting a 1 N aqueous sodium hydroxide solution of paramylon was very brittle, and thus, measurement using the universal tester was not possible. On the other hand, as shown in Table 1, it is clear that the derivatives of the present invention such as Derivative 2 (Myr-Ac) have thermoplasticity since the derivatives have glass transition points, and the elastic modulus was measurable. From these results, it is clear that derivatives having thermoplasticity can be obtained by acylation of at least a part of the hydroxyl groups in a polymer which has β-1,3-glucan as a main chain such as paramylon.

### [Example 2]

Various acylated paramylon derivatives were prepared by acylation of paramylon derived from Euglena gracilis using a fatty acid having different numbers of carbon atoms, and various properties thereof were compared to polylactic acid and polyamide 11 that were mass-produced as a bioplastic, and a petroleum-derived ABS resin for durable products. The polylactic acid (PLA) (product name: TE-4000) was obtained from Unitika Ltd. (Japan), the polyamide 11 (Poly11-aminoundecanoic acid: PA11) (product name: Rilson BMFO) was obtained from Arkema Japan Ltd. (Japan), and the ABS resin (product name: GA-701) was obtained from Nippon A & L Co. (Japan).

### (Preparation Example 19) Preparation of Myristoyl Group-Introduced Paramylon

A target product (myristoyl group-introduced paramylon, hereinafter, referred to as "Derivative 19 (Myr)") was obtained in the same manner as in Preparation Example 1 of Example 1 except that the white precipitate was washed with a mixed solvent of methanol-chloroform (2/1) instead of methanol.

### (Preparation Example 20) Preparation of Myristoyl Group/Acetyl Group-Introduced Paramylon

A target product (paramylon derivative obtained by acetylation of myristoyl group-introduced paramylon, hereinafter, referred to as "Derivative 20 (Myr-Ac)") (11.3 g) was obtained in the same manner as in Preparation Example 2 except that Derivative 19 (Myr) obtained in Preparation Example 19 was used instead of Derivative 1 (Myr), after the reaction was completed, distilled water (3000 mL) was added thereto, and as a result, a white precipitate was produced, the white precipitate obtained by suction filtration was stirring-washed once with water (1600 mL) and washed once with methanol (300 mL), and after the unreacted material was confirmed to be 1 % by mass or less, the white precipitate was dried by heating at 70°C for 1 hour and further at 105°C for 4 hours.

### (Preparation Example 21) Preparation of Palmitoyl Group-Introduced Paramylon

A target product (palmitoyl group-introduced paramylon, hereinafter, referred to as "Derivative 21 (Pam)") was obtained in the same manner as in Preparation Example 1 of Example 1 except that palmitoyl chloride was used instead of myristoyl chloride, and the obtained white precipitate was washed with a mixed solvent of methanol-chloroform (2/1) instead of methanol.

### (Preparation Example 22) Preparation of Palmitoyl Group/Acetyl Group-Introduced Paramylon

A target product (paramylon derivative obtained by acetylation of palmitoyl group-introduced paramylon, hereinafter, referred to as "Derivative 22 (Pam-Ac)") (10.9 g) was obtained in the same manner as in Preparation Example 2 except that Derivative 21 (Pam) obtained in Preparation Example 21 was used instead of Derivative 1 (Myr), after the reaction was completed, distilled water (3000 mL) was added thereto, and as a result, a white precipitate was produced, the white precipitate obtained by suction filtration was stirring-washed once with water (1600 mL) and washed once with methanol (300 mL), and after the unreacted material was confirmed to be 1% by mass or less, the white precipitate was dried by heating at 70°C for 1 hour and further at 105°C for 4 hours.

### (Preparation Example 23) Preparation of Stearoyl Group-Introduced Paramylon

A target product (stearoyl group-introduced paramylon, hereinafter, referred to as "Derivative 23 (Ste)") was obtained in the same manner as in Preparation Example 1 of Example 1 except that stearoyl chloride was used instead of myristoyl chloride, and the obtained white precipitate was washed with a mixed solvent of methanol-chloroform (2/1) instead of methanol.

### (Preparation Example 24) Preparation of Stearoyl Group/Acetyl Group-Introduced Paramylon

A target product (paramylon derivative obtained by acetylation of stearoyl group-introduced paramylon, hereinafter, referred to as "Derivative 24 (Ste-Ac)") (11.0 g) was obtained in the same manner as in Preparation Example 2 except that Derivative 23 (Ste) obtained in Preparation Example 23 was used instead of Derivative 1 (Myr), after the reaction was completed, distilled water (3000 mL) was added thereto to, and as a result, a white precipitate was produced, the white precipitate obtained by suction filtration was stirring-washed once with water (1600 mL) and washed once with methanol (300 mL), and after the unreacted material was confirmed to be 1 % by mass or less, the white precipitate was dried by heating at 70°C for 1 hour and further at 105°C for 4 hours.

### (Calculation of Substitution Degree)

¹H-NMR measurement was performed on each derivative, and from the integrated value, the substitution degree of a myristoyl group, a palmitoyl group, or a stearoyl group and the substitution degree of an acetyl group were calculated.

### (Measurement of Number Average Molecular Weight)

The number-average molecular weight (M_{N}) (standard polystyrene conversion) of each derivative synthesized was measured by a GPC method under the following conditions.
GPC apparatus: LC-10AVP system (Shimadzu Co., Japan),
Used column: Shim Pack GPC 80MC (Shimadzu Co., Japan),
Eluent: Chloroform
Flow rate: 1.0 mL/min
Standard sample: Polystyrene (product name: Shodex (registered trademark) SM-105, manufactured by Showa Denko K.K.).

### (Molded Body)

Each derivative synthesized and a commercially available resin was molded at 210°C using an injection molding machine (product name: HAAKE Mini Jet II, Thermo Fisher Scientific Co., Germany) to obtain a sample (molded body) for measuring mechanical characteristics or a water absorption ratio. Polylactic acid was molded, and then, heated at 100°C for 4 hours for a crystallization treatment.

### (Measurement of Melt Flow Rate)

Melt flow rates (MFR) of each derivative and the resin were measured to evaluate thermoplasticity. Specifically, using a capillary column (product name: CFT-500D, Shimadzu Co., Japan), the amount of resin flowed down for 10 minutes at the time when heated under 200°C and a load of 500 kgf/cm² was measured. Before the measurement, the sample was dried by heating at 105°C for 5 hours.

### (Differential Scanning Calorimetry)

Using a differential thermal analyzer (product name: DSC 6200/EXSTAR6000, Seiko Instrument Inc., Japan), the temperature was initially raised from -100°C to 230°C at a temperature raising rate of 10°C/min, and after holding at 230°C for 3 minutes, the temperature was lowered. Next, the quantity of heat at the time when the temperature was raised under the same conditions was measured, and the glass transition point (Tg) was determined from the inflection point.

### (Thermogravimetric Analysis)

The weight loss ratio at the time when the temperature was raised from 25°C to 500°C at a temperature raising rate of 10°C/min in a stream of nitrogen was measured using a thermogravimetric analyzer (product name: S2 EXSTAR 6000, Seiko Instrument Inc., Japan).

### (Water Resistance)

The water absorption ratio was determined by measurement of the weight increase ratio of a bending test piece predried at 105°C for 2 hours before and after the bending test piece was immersed in pure water at room temperature for 24 hours.

### (Bending Characteristics)

The maximum strength, the elastic modulus, and the breaking elongation were measured using a bending measurement apparatus (product name: INSTRON 5567, Instron Co., USA) according to ASTM D790. The thickness of the test piece was 2.4 mm, the length was 40 mm, and the width was 12.4 mm.

### (Impact Resistance)

The Izod impact strength was measured using an impact strength measurement apparatus (product name: Universal Impact Tester C1, Toyo Seiki CO., Japan) according to JISK7110. The thickness in a notch of the test piece was 2.4 mm, the length was 80 mm, and the width was 12.4 mm.

The measurement results of the substitution degree, the number-average molecular weight (M_{N}), the heat resistance (Tg), the resistance to thermal decomposition (5% weight loss point), the thermoplasticity (MFR), the water resistance (water absorption ratio), the bending characteristics, and the impact resistance of each derivative are shown in Tables 2 and 3. In Table 2, the upper part of the "substitution degree" column indicates the substitution degree of a myristoyl group, a palmitoyl group, or a stearoyl group of each derivative, and the lower part indicates the substitution degree of an acetyl group.

**[Table 2]**

| | Substitution degree | Tg (°C) | M_{N} (x 10⁴) | MFR (g/10min) | 5% weight loss point (°C) | Water absorption ratio (%) |
|---|---|---|---|---|---|---|
| Derivative 20 (Myr-Ac) | | 124 | 1.48 | 1181 | 356 | 2.06 |
| | 0.32 | | | | | 2.10 |
| | 1.27 | | | | | Ave:2.08 |
| Derivative 22 (Pam-Ac) | | 110 | 2.46 | 1721 | 332 | 1.30 |
| | 0.50 | | | | | 1.36 |
| | 2.02 | | | | | Ave: 1.33 |
| Derivative 24 (Ste-Ac) | | 113 | 5.94 | 1289 | 357 | 1.28 |
| | 0.46 | | | | | 1.20 |
| | 2.07 | | | | | Ave: 1.24 |
| CDA | - | 109 | - | 960 | - | 5.9 |
| PLA | - | 60 | - | 1320 | 393 | 0.42 |
| PA11 | - | 45 | - | 1340 | 391 | 0.30 |
| ARS | - | 102 | - | 1040 | - | 0.51 |

**[Table 3]**

| | Bending strength (MPa) | Bending modulus (GPa) | Bending elongation (%) | Impact strength (kJ/cm²) |
|---|---|---|---|---|
| Derivative 20 (Myr-Ac) | 61.8 | 1.70 | >10 | 5.88 |
| | 61.9 | 1.66 | | 2.17 |
| | Ave:61.9 | Ave:1.68 | | Ave:4.00 |
| Derivative 22 (Pam-Ac) | 39.3 | 1.10 | >10 | 2.04 |
| | 39.1 | 1.19 | | 1.98 |
| | Ave:39.2 | Ave:1.15 | | Ave:2.00 |
| Derivative 24 (Ste-Ac) | 38.3 | 1.01 | >10 | 3.59 |
| | 37.2 | 0.83 | | 4.42 |
| | Ave:37.8 | Ave:092 | | Ave:4.00 |
| CDA | 68 | 2.6 | >10 | 8.8 |
| PLA | 97 | 4.9 | 2.3 | 4.8 |
| PA11 | 62 | 1.2 | >10 | 3.9 |
| ARS | 78 | 2.7 | >10 | 21.9 |

All of the derivatives 20 (Myr-Ac), 22 (Pam-Ac), and 24 (Ste-Ac) exhibited excellent thermoplasticity similar to acetyl cellulose (CDA) including a plasticizer (TEC), an existing bioplastic (PLA, PA11), and an ABS resin derived from petroleum raw materials for durable products. In addition, the heat resistance (Tg) of the derivatives was superior to that of the bioplastic in the related art or the ABS resin. Further, the resistance to thermal decomposition (5% weight loss point) was sufficient, although slightly lower than that of the bioplastic in the related art. The water resistance (water absorption ratio) was superior to that of a plasticizer-added acetyl cellulose, although lower than that of the plastic in the related art. In contrast, among the mechanical characteristics, all of the bending strength, the elastic modulus, and the impact resistance of the derivatives were lower than those of the bioplastic in the related art.

### [Example 3]

Various paramylon derivatives were prepared by acylation of paramylon derived from Euglena gracilis using a fatty acid having different numbers of carbon atoms, and various physical properties thereof were examined.

### (Preparation Example 25) Preparation of Myristoyl Group-Introduced Paramylon (load ratio: [myristoyl chloride] / [glucose unit] = 0.5)

Paramylon (10.0 g), lithium chloride (8.0 g), and DMAc (0.5 L) were put into a 2 L three-necked flask, followed by stirring at 120°C in a nitrogen atmosphere. The solution in the three-necked flask became transparent about 1 hour after the stirring was started. After the temperature of the transparent solution was returned to room temperature, triethylamine (7.8 mL) was added thereto, then, a DMAc (0.5 L) solution of myristoyl chloride (8.4 mL) was added dropwise thereto, and the solution was allowed to react by being stirred in a nitrogen atmosphere while heating to 120°C. After 3 hours, methanol (2.0 L) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (900 mL) of methanol-chloroform (2/1) and separated by suction filtration, and the resultant product was dried by air overnight and further dried by heating (at 70°C, for 2 hours) under reduced pressure, whereby a target product (myristoyl group-introduced paramylon, hereinafter, referred to as "Derivative T1 (Myr)") was obtained.

### (Preparation Example 26) Preparation of Myristoyl Group/Acetyl Group-Introduced Paramylon

The derivative T1 (Myr) (12.5 g) obtained in Preparation Example 25, lithium chloride (6.6 g), and DMAc (1.5 L) were put into a 2 L recovery flask, followed by stirring at 120°C for 1 hour in a nitrogen atmosphere. After stirring, the temperature of the solution which became homogeneous was cooled to 70°C, then, pyridine (168 mL) and acetic anhydride (240 mL) were added to the solution, and the resultant product was allowed to react by being stirred for 6 hours in a nitrogen atmosphere and at room temperature for 17 hours. After the reaction was completed, distilled water (3.0 L) was added to the reaction solution, as a result, a white precipitate was produced, and suction filtration was performed, whereby a white precipitate was obtained. The white precipitate was washed with water (1.6 L) and methanol (0.3 L), dried by air overnight, and further dried by heating (at 80°C (for 1 hour), and then, at 105°C (for 4 hours)) under reduced pressure, whereby a target product (paramylon derivative obtained by acetylation of myristoyl group-introduced paramylon, hereinafter, referred to as "Derivative T2 (Myr-Ac)") (15.1 g) was obtained.

¹H-NMR, ¹³C-NMR, and FT-IR measurement results of Derivative T2 (Myr-Ac) are shown below.
¹H-NMR(CDCl₃): δ 4.99-4.75 (m), 4.47-4.20 (m), 4.08-3.96 (m), 3.79-3.57 (m), 2.37-2.21 (m), 2.12 (s), 2.06 (s), 2.00 (s), 1.57 (m), 1.26 (s), 0.88 (t,J=6.9). ¹³C-NMR(CDCl₃): δ 173.4, 170.5, 169.0, 168.8, 100.7, 78.4, 72.7, 71.8, 68.1, 62.0, 33.9, 31.9, 29.6, 29.5, 29.3, 29.2, 29.1, 24.6, 22.6, 20.8, 20.7, 20.4, 14.1. FT-IR(cm⁻¹): 2875, 2807, 1740, 1365, 1212, 1033, 886.

### (Preparation Example 27) Preparation of Myristoyl Group-Introduced Paramylon (load ratio: [myristoyl chloride] / [glucose unit] = 1.0)

Paramylon (10.2 g), lithium chloride (7.9 g), and DMAc (0.5 L) were put into a 2 L three-necked flask, followed by stirring at 120°C in a nitrogen atmosphere. The solution in the three-necked flask became transparent about 1 hour after the stirring was started. After the temperature of the transparent solution was returned to room temperature, triethylamine (12.9 mL) was added thereto, then, a DMAc (0.5 L) solution of myristoyl chloride (15.2 mL) was added dropwise thereto, and the solution was allowed to react by being stirred in a nitrogen atmosphere while heating to 120°C. After 3 hours, methanol (2.0 L) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (300 mL) of methanol-chloroform (2/1) and separated by suction filtration, and the resultant product was dried by air overnight and further dried by heating (at 80°C, for 2 hours) under reduced pressure, whereby a target product (myristoyl group-introduced paramylon, hereinafter, referred to as "Derivative T3 (Myr)") was obtained.

### (Preparation Example 28) Preparation of Myristoyl Group/Acetyl Group-Introduced Paramylon

The derivative T3 (Myr) (12.4 g) obtained in Preparation Example 27, lithium chloride (6.8 g), and DMAc (1.5 L) were put into a 2 L recovery flask, followed by stirring at 120°C for 1 hour in a nitrogen atmosphere. After stirring, the temperature of the solution which became homogeneous was cooled to 70°C, then, pyridine (168 mL) and acetic anhydride (240 mL) were added to the solution, and the resultant product was allowed to react by being stirred for 6 hours in a nitrogen atmosphere and at room temperature for 21 hours. After the reaction was completed, distilled water (3.0 L) was added to the reaction solution, as a result, a white precipitate was produced, and suction filtration was performed, whereby a white precipitate was obtained. The white precipitate was washed with water (1.6 L) and methanol (0.3 L), dried by air overnight, and further dried by heating (at 70°C (for 0.5 hours), and then, at 105°C (for 4 hours)) under reduced pressure, whereby a target product (paramylon derivative obtained by acetylation of myristoyl group-introduced paramylon, hereinafter, referred to as "Derivative T4 (Myr-Ac)") (12.5 g) was obtained.

¹H-NMR, ¹³C-NMR, and FT-IR measurement results of Derivative T4 (Myr-Ac) are shown below.
¹H-NMR(CDCl₃): δ 4.99-4.75 (m), 4.47-4.20 (m), 4.08-3.96 (m), 3.79-3.57 (m), 2.37-2.21 (m), 2.11 (s), 2.07 (s), 1.99 (s), 1.58 (m), 1.25 (s), 0.87 (t,J=6.9). ¹³C-NMR(CDCl₃): δ 173.4, 170.5, 169.0, 168.8, 100.7, 78.4, 72.7, 71.8, 68.1, 62.0, 33.9, 31.9, 29.6, 29.5, 29.3, 29.2, 29.1, 24.6, 22.6, 20.9, 20.7, 20.5, 14.1. FT-IR(cm⁻¹): 2918, 2849, 1740, 1364, 1210, 1029, 888.

### (Preparation Example 29) Preparation of Myristoyl Group-Introduced Paramylon (load ratio: [myristoyl chloride] / [glucose unit] = 0.5)

Paramylon (10.0 g), lithium chloride (7.9 g), and DMAc (0.5 L) were put into a 2 L three-necked flask, followed by stirring at 120°C in a nitrogen atmosphere. The solution in the three-necked flask became transparent about 1 hour after the stirring was started. After the temperature of the transparent solution was returned to room temperature, triethylamine (43.0 mL) was added thereto, then, a DMAc (0.1 L) solution of myristoyl chloride (8.4 mL) was added dropwise thereto, and the solution was allowed to react by being stirred in a nitrogen atmosphere while heating to 120°C. After 3 hours, methanol (1.2 L) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (900 mL) of methanol-chloroform (2/1) and separated by suction filtration, and the resultant product was dried by air overnight and further dried by heating (at 80°C, for 2 hours) under reduced pressure, whereby a target product (myristoyl group-introduced paramylon, hereinafter, referred to as "Derivative TX1 (Myr)") was obtained.

### (Preparation Example 30) Preparation of Myristoyl Group/Acetyl Group-Introduced Paramylon

The derivative TX1 (Myr) (13.6 g) obtained in Preparation Example 29, lithium chloride (6.5 g), and DMAc (1.5 L) were put into a 2 L recovery flask, followed by stirring at 120°C for 1 hour in a nitrogen atmosphere. After stirring, the temperature of the solution which became homogeneous was cooled to 70°C, then, pyridine (168 mL) and acetic anhydride (240 mL) were added to the solution, and the resultant product was allowed to react by being stirred for 6 hours in a nitrogen atmosphere and at room temperature for 21 hours. After the reaction was completed, distilled water (3.0 L) was added to the reaction solution, as a result, a white precipitate was produced, and suction filtration was performed, whereby a white precipitate was obtained. The white precipitate was washed with water (1.6 L) and methanol (0.3 L), dried by air overnight, and further dried by heating (at 70°C (for 0.5 hours), and then, at 105°C (for 4 hours)) under reduced pressure, whereby a target product (paramylon derivative obtained by acetylation of myristoyl group-introduced paramylon, hereinafter, referred to as "Derivative TX2 (Myr-Ac)") (14.8 g) was obtained.

¹H-NMR, ¹³C-NMR, and FT-IR measurement results of Derivative TX2 (Myr-Ac) are shown below.
¹H-NMR(CDCl₃): δ 4.99-4.75 (m), 4.45-4.22 (m), 4.08-3.95 (m), 3.79-3.55 (m), 2.41-2.18 (m), 2.12 (s), 2.06 (s), 1.99 (s), 1.75-1.52 (m), 1.26 (s), 0.88 (t,J=6.9). ¹³C-NMR(CDCl₃): δ 173.5, 170.6, 169.2, 100.6, 78.3, 72.5, 71.8, 68.0, 61.9, 33.8, 31.8, 29.6, 29.4, 29.3, 29.1, 24.6, 22.6, 20.9, 20.6, 20.4, 14.1.
FT-IR(cm⁻¹): 2924, 2861, 1749, 1371, 1210, 1031, 8900.

### (Preparation Example 31) Preparation of Myristoyl Group-Introduced Paramylon (load ratio: [myristoyl chloride] / [glucose unit] = 0.25)

Paramylon (10.0 g), lithium chloride (7.9 g), and DMAc (0.5 L) were put into a 10 L three-necked flask, followed by stirring at 120°C in a nitrogen atmosphere. The solution in the three-necked flask became transparent about 1 hour after the stirring was started. After the temperature of the transparent solution was returned to room temperature, triethylamine (4.3 mL) was added thereto, then, a DMAc (0.5 L) solution of myristoyl chloride (4.2 mL) was added dropwise thereto, and the solution was allowed to react by being stirred in a nitrogen atmosphere while heating to 120°C. After 3 hours, distilled water (2.0 L) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (900 mL) of methanol-chloroform (2/1) and separated by suction filtration, and the resultant product was dried by air overnight and further dried by heating (at 80°C, for 2 hours) under reduced pressure, whereby a target product (myristoyl group-introduced paramylon, hereinafter, referred to as "Derivative TX3 (Myr)") was obtained.

### (Preparation Example 32) Preparation of Myristoyl Group/Acetyl Group-Introduced Paramylon

The derivative TX3 (Myr) (10.0 g) obtained in Preparation Example 31, lithium chloride (6.5 g), and DMAc (1.5 L) were put into a 10 L recovery flask, followed by stirring at 120°C for 1 hour in a nitrogen atmosphere. After stirring, the temperature of the solution which became homogeneous was cooled to 70°C, then, pyridine (168 mL) and acetic anhydride (240 mL) were added to the solution, and the resultant product was allowed to react by being stirred for 6 hours in a nitrogen atmosphere and at room temperature for 16 hours. After the reaction was completed, distilled water (3.0 L) was added to the reaction solution, as a result, a white precipitate was produced, and suction filtration was performed, whereby a white precipitate was obtained. The white precipitate was washed with water (1.6 L) and methanol (0.3 L), dried by air overnight, and further dried by heating (at 70°C (for 0.5 hours), and then, at 105°C (for 4 hours)) under reduced pressure, whereby a target product (paramylon derivative obtained by acetylation of myristoyl group-introduced paramylon, hereinafter, referred to as "Derivative TX4 (Myr-Ac)") (14.8 g) was obtained.

¹H-NMR, ¹³C-NMR, and FT-IR measurement results of Derivative TX4 (Myr-Ac) are shown below.
¹H-NMR(CDCl₃): δ 5.01-4.72 (m), 4.53-4.21 (m), 4.14-3.92 (m), 3.85-3.51 (m), 2.37-2.18 (m), 2.12 (s), 2.06 (s), 2.00 (s), 1.62-1.55 (m), 1.26 (s), 0.88 (t,J=6.9). ¹³C-NMR(CDCl₃): δ 173.5, 170.6, 169.1, 168.9, 100.6, 78.4, 72.6, 71.7, 67.9, 61.9, 34.0, 31.8, 29.6, 29.4, 29.3, 29.1, 24.6, 22.6, 20.8, 20.6, 20.4, 14.0. FT-IR(cm⁻¹): 2913, 2864, 1742, 1365, 1218, 1034, 895.

### (Preparation Example 33) Preparation of Palmitoyl Group-Introduced Paramylon (load ratio: [palmitoyl chloride] / [glucose unit] = 0.5)

Paramylon (10.0 g), lithium chloride (8.1 g), and DMAc (0.5 L) were put into a 10 L three-necked flask, followed by stirring at 120°C in a nitrogen atmosphere. The solution in the three-necked flask became transparent about 1 hour after the stirring was started. After the temperature of the transparent solution was returned to room temperature, triethylamine (9.5 mL) was added thereto, then, DMAc (0.5 L) which was obtained by dissolving palmitoyl chloride (9.4 mL) was added dropwise thereto, and the solution was allowed to react by being stirred in a nitrogen atmosphere while heating to 120°C. After 3 hours, methanol (2.0 L) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (900 mL) of methanol-chloroform (2/1) and separated by suction filtration, and the resultant product was dried by air overnight and further dried by heating (at 80°C, for 2 hours) under reduced pressure, whereby a target product (palmitoyl group-introduced paramylon, hereinafter, referred to as "Derivative T5 (Pam)") was obtained.

### (Preparation Example 34) Preparation of Palmitoyl Group/Acetyl Group-Introduced Paramylon

The derivative T5 (Pam) (13.2 g) obtained in Preparation Example 33, lithium chloride (6.8 g), and DMAc (1.5 L) were put into a 10 L recovery flask, followed by stirring at 120°C for 1 hour in a nitrogen atmosphere. After stirring, the temperature of the solution which became homogeneous was cooled to 70°C, then, pyridine (168 mL) and acetic anhydride (240 mL) were added to the solution, and the resultant product was allowed to react by being stirred for 3 hours in a nitrogen atmosphere and at room temperature for 21 hours. After the reaction was completed, distilled water (3.0 L) was added to the reaction solution, as a result, a white precipitate was produced, and suction filtration was performed, whereby a white precipitate was obtained. The white precipitate was washed with water (1.6 L) and methanol (0.3 L), dried by air overnight, further dried by heating (at 70°C (for 1 hours), and then, dried at 105°C (for 4 hours)) under reduced pressure, whereby a target product (paramylon derivative obtained by acetylation of palmitoyl group-introduced paramylon, hereinafter, referred to as "Derivative T6 (Pam-Ac)") (14.7 g) was obtained.

¹H-NMR, ¹³C-NMR, and FT-IR measurement results of Derivative T6 (Pam-Ac) are shown below.
¹H-NMR(CDCl₃): δ 4.99-4.75 (m), 4.47-4.20 (m), 4.08-3.96 (m), 3.79-3.57 (m), 2.37-2.21 (m), 2.11 (s), 2.06 (s), 2.00 (s), 1.56 (m), 1.26 (s), 0.88 (t,J=6.9). ¹³C-NMR(CDCl₃): δ 173.4, 170.5, 169.0, 100.7, 78.4, 72.7, 71.8, 68.1, 62.0, 33.9, 31.9, 29.7, 29.5, 29.3, 29.1, 24.6, 22.6, 20.9, 20.7, 20.4, 14.1.
FT-IR(cm⁻¹): 2911, 2846, 1741, 1365, 1213, 1032, 887.

### (Preparation Example 35) Preparation of Palmitoyl Group-Introduced Paramylon (load ratio: [palmitoyl chloride] / [glucose unit] = 1.0)

Paramylon (10.2 g), lithium chloride (7.9 g), and DMAc (0.5 L) were put into a 10 L three-necked flask, followed by stirring at 120°C in a nitrogen atmosphere. The solution in the three-necked flask became transparent about 1 hour after the stirring was started. After the temperature of the transparent solution was returned to room temperature, triethylamine (12.9 mL) was added thereto, then, a DMAc (0.5 L) solution of palmitoyl chloride (18.7 mL) was added dropwise thereto, and the solution was allowed to react by being stirred in a nitrogen atmosphere while heating to 120°C. After 3 hours, a mixed solvent (3.0 L) of methanol-chloroform (2/1) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (400 mL) of methanol-chloroform (2/1) and separated by suction filtration, and the resultant product was dried by air overnight and further dried by heating (at 80°C, for 2 hours) under reduced pressure, whereby a target product (palmitoyl group-introduced paramylon, hereinafter, referred to as "Derivative T7 (Pam)") was obtained.

### (Preparation Example 36) Preparation of Palmitoyl Group/Acetyl Group-Introduced Paramylon

The derivative T7 (Pam) (11.0 g) obtained in Preparation Example 35, lithium chloride (6.6 g), and DMAc (1.5 L) were put into a 10 L recovery flask, followed by stirring at 120°C for 1 hour in a nitrogen atmosphere. After stirring, the temperature of the solution which became homogeneous was cooled to 70°C, then, pyridine (168 mL) and acetic anhydride (240 mL) were added to the solution, and the resultant product was allowed to react by being stirred for 8 hours in a nitrogen atmosphere and at room temperature for 14 hours. After the reaction was completed, distilled water (3.0 L) was added to the reaction solution, as a result, a white precipitate was produced, and suction filtration was performed, whereby a white precipitate was obtained. The white precipitate was washed with water (0.8 L) and methanol (0.15 L), dried by air overnight, and further dried by heating (at 70°C (for 1 hour), and then, at 105°C (for 5 hours)) under reduced pressure, whereby a target product (paramylon derivative obtained by acetylation of palmitoyl group-introduced paramylon, hereinafter, referred to as "Derivative T8 (Pam-Ac)") (13.5g) was obtained.

¹H-NMR, ¹³C-NMR, and FT-IR measurement results of Derivative T8 (Pam-Ac) are shown below.
¹H-NMR(CDCl₃): δ 4.99-4.75 (m), 4.47-4.20 (m), 4.08-3.96 (m), 3.79-3.57 (m), 2.37-2.21 (m), 2.11 (s), 2.05 (s), 1.98 (s), 1.58 (m), 1.25 (s), 0.87 (t,J=6.9). ¹³C-NMR(CDCl₃): δ 173.4, 170.5, 169.0, 168.8, 100.7, 78.4, 72.7, 71.8, 68.2, 62.0, 33.9, 31.9, 29.7, 29.5, 29.3, 29.2, 29.1, 24.7, 22.7, 20.8, 20.7, 20.5, 20.4, 14.1. FT-IR(cm⁻¹): 2914, 2849, 1747, 1363, 1213, 1032, 890.

### (Preparation Example 37) Preparation of Stearoyl Group-Introduced Paramylon (load ratio: [stearoyl chloride] / [glucose unit] = 0.5)

Paramylon (10.2 g), lithium chloride (7.9 g), and DMAc (0.5 L) were put into a 10 L three-necked flask, followed by stirring at 120°C in a nitrogen atmosphere. The solution in the three-necked flask became transparent about 1 hour after the stirring was started. After the temperature of the transparent solution was returned to room temperature, triethylamine (9.5 mL) was added thereto, then, a DMAc (0.5 L) solution of stearoyl chloride (10.4 mL) was added dropwise thereto, and the solution was allowed to react by being stirred in a nitrogen atmosphere while heating to 120°C. After 3 hours, a mixed solvent (1.8 L) of methanol-chloroform (2/1) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (600 mL) of methanol-chloroform (2/1) and separated by suction filtration, and the resultant product was dried by air overnight and further dried by heating (at 80°C (for 4 hours), at 105°C (for 4 hours)) under reduced pressure, whereby a target product (stearoyl group-introduced paramylon, hereinafter, referred to as "Derivative T9 (Ste)") was obtained.

### (Preparation Example 38) Preparation of Stearoyl Group/Acetyl Group-Introduced Paramylon

The derivative T9 (Ste) (29.8 g) obtained in Preparation Example 37, lithium chloride (6.6 g), and DMAc (1.5 L) were put into a 10 L recovery flask, followed by stirring at 120°C for 1 hour in a nitrogen atmosphere. After stirring, the temperature of the solution which became homogeneous was cooled to 70°C, then, pyridine (168 mL) and acetic anhydride (240 mL) were added to the solution, and the resultant product was allowed to react by being stirred for 8 hours in a nitrogen atmosphere and at room temperature for 14 hours. After the reaction was completed, distilled water (3.0 L) was added to the reaction solution, as a result, a white precipitate was produced, and suction filtration was performed, whereby a white precipitate was obtained. The white precipitate was washed with water (1.6 L) and methanol (0.3 L), dried by air overnight, and further dried by heating (at 70°C (for 2 hours), and then, at 105°C (for 4 hours)) under reduced pressure, whereby a target product (paramylon derivative obtained by acetylation of stearoyl group-introduced paramylon, hereinafter, referred to as "Derivative T10 (Ste-Ac)") (17.5 g) was obtained.

¹H-NMR, ¹³C-NMR, and FT-IR measurement results of Derivative T10 (Ste-Ac) are shown below.
¹H-NMR(CDCl₃): δ 4.99-4.75 (m), 4.47-4.20 (m), 4.08-3.96 (m), 3.79-3.57 (m), 2.37-2.21 (m), 2.12 (s), 2.06 (s), 2.00 (s), 1.55 (m), 1.26 (s), 0.88 (t,J=6.9). ¹³C-NMR(CDCl₃): δ 173.4, 170.5, 169.0, 100.7, 78.4, 72.6, 71.8, 68.1, 62.1, 33.9, 31.9, 29.7, 29.5, 29.3, 29.1, 24.6, 22.6, 20.8, 20.7, 20.4, 14.1.
FT-IR(cm⁻¹): 2920, 2847, 1740, 1365, 1212, 1031, 889.

### (Preparation Example 39) Preparation of Stearoyl Group-Introduced Paramylon (load ratio: [stearoyl chloride] / [glucose unit] = 1.0)

Paramylon (10.4 g), lithium chloride (7.9 g), and DMAc (0.5 L) were put into a 10 L three-necked flask, followed by stirring at 120°C in a nitrogen atmosphere. The solution in the three-necked flask became transparent about 1 hour after the stirring was started. After the temperature of the transparent solution was returned to room temperature, triethylamine (12.9 mL) was added thereto, then, a DMAc (0.5 L) solution of stearoyl chloride (20.8 mL) was added dropwise thereto, and the solution was allowed to react by being stirred in a nitrogen atmosphere while heating to 120°C. After 3 hours, a mixed solvent (1.8 L) of methanol-chloroform (2/1) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (900 mL) of methanol-chloroform (2/1) and separated by suction filtration, and the resultant product was dried by air overnight and further dried by heating (at 80°C, for 4 hours) under reduced pressure, whereby a target product (stearoyl group-introduced paramylon, hereinafter, referred to as "Derivative T11 (Ste)") was obtained.

### (Preparation Example 40) Preparation of Stearoyl Group/Acetyl Group-Introduced Paramylon

The derivative T11 (Ste) (12.3 g) obtained in Preparation Example 39, lithium chloride (6.8 g), and DMAc (1.5 L) were put into a 10 L recovery flask, followed by stirring at 120°C for 1 hour in a nitrogen atmosphere. After stirring, the temperature of the solution which became homogeneous was cooled to 70°C, then, pyridine (168 mL) and acetic anhydride (240 mL) were added to the solution, and the resultant product was allowed to react by being stirred for 6 hours in a nitrogen atmosphere and at room temperature for 19 hours. After the reaction was completed, distilled water (3.0 L) was added to the reaction solution, as a result, a white precipitate was produced, and suction filtration was performed, whereby a white precipitate was obtained. The white precipitate was washed with water (1.6 L) and methanol (0.3 L), dried by air overnight, and further dried by heating (at 70°C (for 2 hours), and then, at 105°C (for 4 hours)) under reduced pressure, whereby a target product (paramylon derivative obtained by acetylation of stearoyl group-introduced paramylon, hereinafter, referred to as "Derivative T12 (Ste-Ac)") (11.2 g) was obtained.

¹H-NMR, ¹³C-NMR, and FT-IR measurement results of Derivative T12 (Ste-Ac) are shown below.
¹H-NMR(CDCl₃): δ 4.99-4.75 (m), 4.47-4.20 (m), 4.08-3.96 (m), 3.79-3.57 (m), 2.37-2.21 (m), 2.12 (s), 2.08 (s), 2.00 (s), 1.58 (m), 1.25 (s), 0.87 (t,J=6.9). ¹³C-NMR(CDCl₃): δ 173.4, 170.6, 169.1, 100.7, 78.5, 72.7, 71.8, 68.2, 62.0, 33.9, 31.9, 29.7, 29.5, 29.4, 29.2, 24.7, 22.7, 20.9, 20.7, 20.5, 14.1.
FT-IR(cm⁻¹): 2920, 2849, 1740, 1366, 1209, 1030, 890.

### (Preparation Example 41) Preparation of Stearoyl Group-Introduced Paramylon (load ratio: [stearoyl chloride] / [glucose unit] = 0.25)

Paramylon (10.0 g), lithium chloride (7.9 g), and DMAc (0.5 L) were put into a 10 L three-necked flask, followed by stirring at 120°C in a nitrogen atmosphere. The solution in the three-necked flask became transparent about 1 hour after the stirring was started. After the temperature of the transparent solution was returned to room temperature, triethylamine (21.5 mL) was added thereto, then, a DMAc (0.5 L) solution of stearoyl chloride (5.2 mL) was added dropwise thereto, and the solution was allowed to react by being stirred in a nitrogen atmosphere while heating to 120°C. After 3 hours, a mixed solvent (1.8 L) of methanol-chloroform (2/1) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (900 mL) of methanol-chloroform (2/1) and separated by suction filtration, and the resultant product was dried by air overnight and further dried by heating (at 80°C, for 4 hours) under reduced pressure, whereby a target product (stearoyl group-introduced paramylon, hereinafter, referred to as "Derivative TX5 (Ste)") was obtained.

### (Preparation Example 42) Preparation of Stearoyl Group/Acetyl Group-Introduced Paramylon

The derivative TX5 (Ste) (9.5 g) obtained in Preparation Example 41, lithium chloride (6.5 g), and DMAc (1.5 L) were put into a 10 L recovery flask, followed by stirring at 120°C for 1 hour in a nitrogen atmosphere. After stirring, the temperature of the solution which became homogeneous was cooled to 70°C, then, pyridine (168 mL) and acetic anhydride (240 mL) were added to the solution, and the resultant product was allowed to react by being stirred for 6 hours in a nitrogen atmosphere and at room temperature for 19 hours. After the reaction was completed, distilled water (3.0 L) was added to the reaction solution, as a result, a white precipitate was produced, and suction filtration was performed, whereby a white precipitate was obtained. The white precipitate was washed with water (1.6 L) and methanol (0.3 L), dried by air overnight, and further dried by heating (at 70°C (for 2 hours), and then, at 105°C (for 4 hours)) under reduced pressure, whereby a target product (paramylon derivative obtained by acetylation of stearoyl group-introduced paramylon, hereinafter, referred to as "Derivative TX6 (Ste-Ac)") (12.3 g) was obtained.

¹H-NMR, ¹³C-NMR, and FT-IR measurement results of Derivative TX6 (Ste-Ac) are shown below.
¹H-NMR(CDCl₃): δ 4.98-4.73 (m), 4.44-4.23 (m), 4.07-3.95 (m), 3.79-3.55 (m), 2.34-2.16 (m), 2.11 (s), 2.05 (s), 1.99 (s), 1.62-1.53 (m), 1.24 (s), 0.87 (t,J=6.9). ¹³C-NMR(CDCl₃): δ 173.4, 170.5, 169.1, 168.5, 100.7, 78.4, 72.6, 71.7, 68.1, 62.0, 33.9, 31.9, 29.7, 29.6, 29.5, 29.3, 29.1, 24.6, 22.6, 20.8, 20.7, 20.4, 14.1. FT-IR(cm⁻¹): 2922, 2857, 1739, 1374, 1216, 1032, 889.

### (Preparation Example 43) Preparation of Decanoyl Group-Introduced Paramylon (load ratio: [decanoyl chloride] / [glucose unit] = 0.5)

Paramylon (3.0 g), lithium chloride (2.4 g), and DMAc (150 mL) were put into a 1 L three-necked flask, followed by stirring at 120°C in a nitrogen atmosphere. The solution in the three-necked flask became transparent about 30 minutes after the stirring was started. After the temperature of the transparent solution was returned to room temperature, triethylamine (12.9 mL) was added thereto, then, a DMAc (150 mL) solution of decanoyl chloride (1.9 mL) was added dropwise thereto, and the solution was allowed to react by being stirred in a nitrogen atmosphere while heating to 120°C. After 3 hours, methanol (0.6 L) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (270 mL) of methanol-chloroform (2/1) and separated by suction filtration, and the resultant product was dried by air overnight and further dried by heating (at 90°C, for 4 hours) under reduced pressure, whereby a target product (decanoyl group-introduced paramylon, hereinafter, referred to as "Derivative T13 (Dec)") was obtained.

### (Preparation Example 44) Preparation of Decanoyl Group/Acetyl Group-Introduced Paramylon

The derivative T13 (Dec) (3.0 g) obtained in Preparation Example 43, lithium chloride (2.0 g), and DMAc (450 mL) were put into a 1 L recovery flask, followed by stirring at 120°C for 30 minutes in a nitrogen atmosphere. After stirring, the temperature of the solution which became homogeneous was cooled to 70°C, then, pyridine (50 mL) and acetic anhydride (72 mL) were added to the solution, and the resultant product was allowed to react by being stirred for 5 hours in a nitrogen atmosphere and at room temperature for 17 hours. After the reaction was completed, methanol (450 mL) and distilled water (450 mL) were added to the reaction solution, as a result, a white precipitate was produced, and suction filtration was performed, whereby a white precipitate was obtained. The white precipitate was washed with distilled water (480 mL) and methanol (480 mL), dried by air overnight, and further dried by heating (at 90°C (for 4 hours)) under reduced pressure, whereby a target product (paramylon derivative obtained by acetylation of decanoyl group-introduced paramylon, hereinafter, referred to as "Derivative T14 (Dec-Ac)") (3.6 g) was obtained.

¹H-NMR, ¹³C-NMR, and FT-IR measurement results of Derivative T14 (Dec-Ac) are shown below.
¹H-NMR(CDCl₃): δ 4.98-4.73 (m), 4.44-4.23 (m), 4.07-3.95 (m), 3.79-3.55 (m), 2.34-2.16 (m), 2.11 (s), 2.05 (s), 1.99 (s), 1.62-1.53 (m), 1.24 (s), 0.87 (t,J=6.9). ¹³C-NMR(CDCl₃): δ 173.4, 170.5, 169.1, 168.5, 100.7, 78.4, 72.6, 71.7, 68.1, 62.0, 33.9, 31.9, 29.7, 29.6, 29.5, 29.3, 29.1, 24.6, 22.6, 20.8, 20.7, 20.4, 14.1. FT-IR(cm⁻¹): 2935, 2845, 1747, 1374, 1214, 1030, 889.

### (Preparation Example 45) Preparation of Decanoyl Group-Introduced Paramylon (load ratio: [decanoyl chloride] / [glucose unit] = 0.5)

Paramylon (3.0 g), lithium chloride (2.4 g), and DMAc (150 mL) were put into a 1 L three-necked flask, followed by stirring at 120°C in a nitrogen atmosphere. The solution in the three-necked flask became transparent about 30 minutes after the stirring was started. After the temperature of the transparent solution was returned to room temperature, triethylamine (12.9 mL) was added thereto, then, a DMAc (150 mL) solution of decanoyl chloride (1.9 mL) was added dropwise thereto, and the solution was allowed to react by being stirred in a nitrogen atmosphere while heating to 120°C. After 3 hours, methanol (0.3 L) and distilled water (0.1 L) were added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (270 mL) of methanol-chloroform (2/1) and separated by suction filtration, and the resultant product was dried by air overnight and further dried by heating (at 90°C, for 4 hours) under reduced pressure, whereby a target product (decanoyl group-introduced paramylon, hereinafter, referred to as "Derivative T15 (Dec)") was obtained.

### (Preparation Example 46) Preparation of Decanoyl Group/Acetyl Group-Introduced Paramylon

The derivative T15 (Dec) (4.1g) obtained in Preparation Example 45, lithium chloride (2.0 g), and DMAc (450 mL) were put into a 1 L recovery flask, followed by stirring at 120°C for 30 minutes in a nitrogen atmosphere. After stirring, the temperature of the solution which became homogeneous was cooled to 70°C, then, pyridine (50 mL) and acetic anhydride (72 mL) were added to the solution, and the resultant product was allowed to react by being stirred for 5 hours in a nitrogen atmosphere and at room temperature for 17 hours. After the reaction was completed, methanol (450 mL) and distilled water (400 mL) were added to the reaction solution, as a result, a white precipitate was produced, and suction filtration was performed, whereby a white precipitate was obtained. The white precipitate was washed with methanol (500 mL), dried by air overnight, and further dried by heating (at 90°C (for 4 hours)) under reduced pressure, whereby a target product (paramylon derivative obtained by acetylation of decanoyl group-introduced paramylon, hereinafter, referred to as "Derivative T16 (Dec-Ac)") (5.8 g) was obtained.

¹H-NMR, ¹³C-NMR, and FT-IR measurement results of Derivative T16 (Dec-Ac) are shown below.
¹H-NMR(CDCl₃): δ 4.97-4.71 (m), 4.45-4.19 (m), 4.08-3.93 (m), 3.82-3.51 (m), 2.38-2.18 (m), 2.11 (s), 2.05 (s), 1.99 (s), 1.62-1.54 (m), 1.25 (s), 0.87 (t,J=6.9). ¹³C-NMR(CDCl₃):δ 173.4, 170.5, 169.1, 168.9, 100.7, 78.3, 72.6, 71.7, 68.1, 61.9, 33.9, 31.8, 29.5, 29.4, 29.2, 29.1, 24.6, 22.6, 20.9, 20.7, 20.4, 14.1. FT-IR(cm⁻¹): 2937, 2859, 1732, 1372, 1214, 1030, 889.

### (Preparation Example 47) Preparation of Undecanoyl Group-Introduced Paramylon (load ratio: [undecanoyl chloride] / [glucose unit] = 0.5)

Paramylon (3.0 g), lithium chloride (2.4 g), and DMAc (150 mL) were put into a 10 L three-necked flask, followed by stirring at 120°C in a nitrogen atmosphere. The solution in the three-necked flask became transparent about 30 minutes after the stirring was started. After the temperature of the transparent solution was returned to room temperature, triethylamine (13.0 mL) was added thereto, then, a DMAc (150 mL) solution of undecanoyl chloride (2.0 mL) was added dropwise thereto, and the solution was allowed to react by being stirred in a nitrogen atmosphere while heating to 120°C. After 3 hours, methanol (0.6 L) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (270 mL) of methanol-chloroform (2/1) and separated by suction filtration, and the resultant product was dried by air overnight and further dried by heating (at 90°C, for 4 hours) under reduced pressure, whereby a target product (decanoyl group-introduced paramylon, hereinafter, referred to as "Derivative T17 (Und)") was obtained.

### (Preparation Example 48) Preparation of Undecanoyl Group/Acetyl Group-Introduced Paramylon

The derivative T17 (Und) (3.8 g) obtained in Preparation Example 47, lithium chloride (2.0 g), and DMAc (450 mL) were put into a 10 L recovery flask, followed by stirring at 120°C for 30 minutes in a nitrogen atmosphere. After stirring, the temperature of the solution which became homogeneous was cooled to 70°C, then, pyridine (50 mL) and acetic anhydride (72 mL) were added to the solution, and the resultant product was allowed to react by being stirred for 5 hours in a nitrogen atmosphere and at room temperature for 17 hours. After the reaction was completed, methanol (500 mL) and distilled water (500 mL) were added to the reaction solution, as a result, a white precipitate was produced, and suction filtration was performed, whereby a white precipitate was obtained. The white precipitate was washed with water (480 mL) and methanol (0.1 L), dried by air overnight, and further dried by heating (at 90°C (for 4 hours)) under reduced pressure, whereby a target product (paramylon derivative obtained by acetylation of undecanoyl group-introduced paramylon, hereinafter, referred to as "Derivative T18 (Und-Ac)") (4.9 g) was obtained.

¹H-NMR, ¹³C-NMR, and FT-IR measurement results of Derivative T18 (Und-Ac) are shown below.
¹H-NMR(CDCl₃): δ 4.99-4.73 (m), 4.45-4.23 (m), 4.07-3.95 (m), 3.79-3.51 (m), 2.34-2.19 (m), 2.11 (s), 2.05 (s), 1.99 (s), 1.62-1.53 (m), 1.25 (s), 0.87 (t,J=6.9). ¹³C-NMR(CDCl₃): δ 173.4, 170.5, 169.1, 168.7, 100.7, 78.4, 72.2, 71.8, 68.1, 62.1, 33.9, 31.9, 29.5, 29.4, 29.3, 29.1, 24.6, 22.6, 20.9, 20.7, 20.4, 14.1. FT-IR(cm⁻¹): 2932, 2856, 1740, 1368, 1212, 1030, 889.

### (Preparation Example 49) Preparation of Lauroyl Group-Introduced Paramylon (load ratio: [lauroyl chloride] / [glucose unit] = 0.25)

Paramylon (11.0 g), lithium chloride (8.6 g), and DMAc (0.5 L) were put into a 2 L three-necked flask, followed by stirring at 120°C in a nitrogen atmosphere. The solution in the three-necked flask became transparent about 1 hour after the stirring was started. After the temperature of the transparent solution was returned to room temperature, triethylamine (4.7 mL) was added thereto, then, a DMAc (0.5 L) solution of lauroyl chloride (4.0 mL) was added dropwise thereto, and the solution was allowed to react by being stirred in a nitrogen atmosphere while heating to 120°C. After 3 hours, water (2.0 L) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (900 mL) of methanol-chloroform (2/1) and separated by suction filtration, and the resultant product was dried by air overnight and further dried by heating (at 90°C, for 4 hours) under reduced pressure, whereby a target product (lauroyl group-introduced paramylon, hereinafter, referred to as "Derivative T19 (Lau)") was obtained.

### (Preparation Example 50) Preparation of Lauroyl Group/Acetyl Group-Introduced Paramylon

The derivative T19 (Lau) (9.5 g) obtained in Preparation Example 49, lithium chloride (6.5 g), and DMAc (1.5 L) were put into a 2 L recovery flask, followed by stirring at 120°C for 1 hour in a nitrogen atmosphere. After stirring, the temperature of the solution which became homogeneous was cooled to 70°C, then, pyridine (168 mL) and acetic anhydride (240 mL) were added to the solution, and the resultant product was allowed to react by being stirred for 6 hours in a nitrogen atmosphere and at room temperature for 16 hours. After the reaction was completed, distilled water (3.0 L) was added to the reaction solution, as a result, a white precipitate was produced, and suction filtration was performed, whereby a white precipitate was obtained. The white precipitate was washed with water (1.6 L) and methanol (0.3 L), dried by air overnight, and further dried by heating (at 90°C (for 4 hours)) under reduced pressure, whereby a target product (paramylon derivative obtained by acetylation of lauroyl group-introduced paramylon, hereinafter, referred to as "Derivative T20 (Lau-Ac)") (13.6 g) was obtained.

¹H-NMR, ¹³C-NMR, and FT-IR measurement results of Derivative T20 (Lau-Ac) are shown below.
¹H-NMR(CDCl₃): δ 4.98-4.73 (m), 4.44-4.23 (m), 4.07-3.95 (m), 3.79-3.55 (m), 2.34-2.16 (m), 2.11 (s), 2.05 (s), 1.99 (s), 1.62-1.53 (m), 1.24 (s), 0.87 (t,J=6.9). ¹³C-NMR(CDCl₃): δ 173.4, 170.5, 169.1, 168.5, 100.7, 78.4, 72.6, 71.7, 68.1, 62.0, 33.9, 31.9, 29.7, 29.6, 29.5, 29.3, 29.1, 24.6, 22.6, 20.8, 20.7, 20.4, 14.1. FT-IR(cm⁻¹): 2932, 2862, 1740, 1374, 1207, 1032, 889.

### (Preparation Example 51) Preparation of Lauroyl Group-Introduced Paramylon (load ratio: [lauroyl chloride] / [glucose unit] = 0.5)

Paramylon (10.0 g), lithium chloride (7.8 g), and DMAc (0.5 L) were put into a 2 L three-necked flask, followed by stirring at 120°C in a nitrogen atmosphere. The solution in the three-necked flask became transparent about 30 minutes after the stirring was started. After the temperature of the transparent solution was returned to room temperature, triethylamine (8.6 mL) was added thereto, then, a DMAc (0.5 L) solution of lauroyl chloride (7.4 mL) was added dropwise thereto, and the solution was allowed to react by being stirred in a nitrogen atmosphere while heating to 120°C. After 3 hours, methanol (2.0 L) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (900 mL) of methanol-chloroform (2/1) and separated by suction filtration, and the resultant product was dried by air overnight and further dried by heating (at 90°C, for 2 hours) under reduced pressure, whereby a target product (lauroyl group-introduced paramylon, hereinafter, referred to as "Derivative T21 (Lau)") was obtained.

### (Preparation Example 52) Preparation of Lauroyl Group/Acetyl Group-Introduced Paramylon

The derivative T21 (Lau) (11.0 g) obtained in Preparation Example 51, lithium chloride (6.5 g), and DMAc (1.5 L) were put into a 2 L recovery flask, followed by stirring at 120°C for 1 hour in a nitrogen atmosphere. After stirring, the temperature of the solution which became homogeneous was cooled to 70°C, then, pyridine (168 mL) and acetic anhydride (240 mL) were added to the solution, and the resultant product was allowed to react by being stirred for 6 hours in a nitrogen atmosphere and at room temperature for 15 hours. After the reaction was completed, distilled water (3.0 L) was added to the reaction solution, as a result, a white precipitate was produced, and suction filtration was performed, whereby a white precipitate was obtained. The white precipitate was washed with water (1.6 L) and methanol (0.3 L), dried by air overnight, and further dried by heating (at 90°C (for 4 hours)) under reduced pressure, whereby a target product (paramylon derivative obtained by acetylation of lauroyl group-introduced paramylon, hereinafter, referred to as "Derivative T22 (Lau-Ac)") (15.1 g) was obtained.

¹H-NMR, ¹³C-NMR, and FT-IR measurement results of Derivative T22 (Lau-Ac) are shown below.
¹H-NMR(CDCl₃): δ 4.98-4.73 (m), 4.44-4.23 (m), 4.07-3.95 (m), 3.79-3.55 (m), 2.34-2.16 (m), 2.11 (s), 2.05 (s), 1.99 (s), 1.62-1.53 (m), 1.24 (s), 0.87 (t,J=6.9). ¹³C-NMR(CDCl₃): δ 173.4, 170.5, 169.1, 168.5, 100.7, 78.4, 72.6, 71.7, 68.1, 62.0, 33.9, 31.9, 29.7, 29.6, 29.5, 29.3, 29.1, 24.6, 22.6, 20.8, 20.7, 20.4, 14.1. FT-IR(cm⁻¹): 2933, 2861, 1739, 1374, 1213, 1031, 895.

### (Preparation Example 53) Preparation of Tridecanoyl Group-Introduced Paramylon (load ratio: [tridecanoyl chloride] / [glucose unit] = 0.25)

First, tridecanoic acid (2.0 g), chloroform (10.0 mL), and oxalyl chloride (1.3 mL) were put into a 50 mL recovery flask, followed by stirring at room temperature in a nitrogen atmosphere. After 3 hours, excess chloroform and oxalyl chloride were removed by blowing nitrogen thereinto. The obtained tridecanoyl chloride was dissolved in DMAc (10.0 mL), whereby a DMAc solution of tridecanoyl chloride was prepared.

Next, paramylon (3.0 g), lithium chloride (2.4 g), and DMAc (150 mL) were put into a 2 L three-necked flask, followed by stirring at 120°C in a nitrogen atmosphere. The solution in the three-necked flask became transparent about 30 minutes after the stirring was started. After the temperature of the transparent solution was returned to room temperature, triethylamine (6.4 mL) was added thereto. The above-prepared DMAc solution (6.0 mL) of tridecanoyl chloride was diluted with DMAc (150 mL), then, the resultant product was added dropwise thereto, and the solution was allowed to react by being stirred in a nitrogen atmosphere while heating to 120°C. After 3 hours, methanol (300 mL) and distilled water (100 mL) were added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (270 mL) of methanol-chloroform (2/1) and separated by suction filtration, and the resultant product was dried by air overnight and further dried by heating (at 90°C, for 2 hours) under reduced pressure, whereby a target product (tridecanoyl group-introduced paramylon, hereinafter, referred to as "Derivative T23 (Tri)") was obtained.

### (Preparation Example 54) Preparation of Tridecanoyl Group/Acetyl Group-Introduced Paramylon

The derivative T23 (Tri) (4.1 g) obtained in Preparation Example 53, lithium chloride (2.0 g), and DMAc (450 mL) were put into a 10 L recovery flask, followed by stirring at 120°C for 30 minutes in a nitrogen atmosphere. After stirring, the temperature of the solution which became homogeneous was cooled to 70°C, then, pyridine (50 mL) and acetic anhydride (72 mL) were added to the solution, and the resultant product was allowed to react by being stirred for 6 hours in a nitrogen atmosphere and at room temperature for 17 hours. After the reaction was completed, methanol (450 mL) and distilled water (450 mL) were added to the reaction solution, as a result, a white precipitate was produced, and the supernatant was removed from the reaction solution by a centrifugal separation treatment, whereby a white precipitate was obtained. The white precipitate was washed with methanol (500 mL), dried by air overnight, and further dried by heating (at 90°C (for 4 hours)) under reduced pressure, whereby a target product (paramylon derivative obtained by acetylation of tridecanoyl group-introduced paramylon, hereinafter, referred to as "Derivative T24 (Tri-Ac)") (5.5 g) was obtained.

¹H-NMR, ¹³C-NMR, and FT-IR measurement results of Derivative T24 (Tri-Ac) are shown below.
¹H-NMR(CDCl₃): δ 4.99-4.73 (m), 4.47-4.21 (m), 4.07-3.95 (m), 3.79-3.55 (m), 2.34-2.16 (m), 2.11 (s), 2.06 (s), 2.00 (s), 1.68-1.55 (m), 1.26(s), 0.88 (t,J=6.9) ¹³C-NMR(CDCl₃): δ 173.4, 170.5, 169.1, 168.9, 100.6, 78.5, 72.6, 71.7, 68.0, 62.0, 33.9, 31.9, 29.6, 29.5, 29.4, 29.3, 29.2, 29.1, 24.6, 22.6, 20.8, 20.7, 20.4, 14.1. FT-IR(cm⁻¹): 2922, 2853, 1748, 1366, 1210, 1030, 889.

### (Preparation Example 55) Preparation of Stearoyl Group-Introduced Paramylon (load ratio: [stearoyl chloride] / [glucose unit] = 0.1)

Paramylon (10.0 g), lithium chloride (7.8 g), and DMAc (0.5 L) were put into a 2 L three-necked flask, followed by stirring at 120°C in a nitrogen atmosphere. The solution in the three-necked flask became transparent about 30 minutes after the stirring was started. After the temperature of the transparent solution was returned to room temperature, triethylamine (8.6 mL) was added thereto, then, a DMAc (0.5 L) solution of stearoyl chloride (2.1 mL) was added dropwise thereto, and the solution was allowed to react by being stirred in a nitrogen atmosphere while heating to 120°C. After 3 hours, a mixed solvent (1.8 L) of methanol-chloroform (2/1) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (900 mL) of methanol-chloroform (2/1), the supernatant was removed from the reaction solution by a centrifugal separation treatment, and the resultant precipitate was dried by air overnight and further dried by heating (at 90°C, for 2 hours) under reduced pressure, whereby a target product (stearoyl group-introduced paramylon, hereinafter, referred to as "Derivative T25 (Ste)") was obtained.

### (Preparation Example 56) Preparation of Stearoyl Group/Acetyl Group-Introduced Paramylon

The derivative T25 (Ste) (11.0 g) obtained in Preparation Example 55, lithium chloride (6.5 g), and DMAc (1.5 L) were put into a 2 L recovery flask, followed by stirring at 120°C for 1 hour in a nitrogen atmosphere. After stirring, the temperature of the solution which became homogeneous was cooled to 70°C, then, pyridine (168 mL) and acetic anhydride (240 mL) were added to the solution, and the resultant product was allowed to react by being stirred for 6 hours in a nitrogen atmosphere and at room temperature for 15 hours. After the reaction was completed, distilled water (3.0 L) was added to the reaction solution, as a result, a white precipitate was produced, and suction filtration was performed, whereby a white precipitate was obtained. The white precipitate was washed with water (1.6 L) and methanol (0.9 L), dried by air overnight, and further dried by heating (at 90°C (for 4 hours)) under reduced pressure, whereby a target product (paramylon derivative obtained by acetylation of stearoyl group-introduced paramylon, hereinafter, referred to as "Derivative T26 (Ste-Ac)") (15.7 g) was obtained.

¹H-NMR, ¹³C-NMR, and FT-IR measurement results of Derivative T26 (Ste-Ac) are shown below.
¹H-NMR(CDCl₃): δ 5.05-4.65 (m), 4.47-4.1 (m), 4.07-3.91 (m), 3.78-3.47 (m), 2.25-2.17 (m), 2.10 (s), 2.04 (s), 1.98 (s), 1.57-1.52 (m), 1.24 (s), 0.86 (t,J=6.9). ¹³C-NMR(CDCl₃): δ 173.3, 170.5, 169.1, 168.9, 100.6, 78.4, 72.6, 71.7, 68.0, 62.0, 31.9, 29.7, 29.6, 29.3, 24.6, 22.6, 21.5, 20.8, 20.7, 20.4, 14.1.
FT-IR(cm⁻¹): 2941, 2872, 1748, 1366, 1207, 1029, 888.

### (Preparation Example 57) Preparation of Lauroyl Group-Introduced Paramylon (load ratio: [lauroyl chloride] / [glucose unit] = 1.0)

Paramylon (10.0 g), lithium chloride (7.8 g), and DMAc (0.5 L) were put into a 2 L three-necked flask, followed by stirring at 120°C in a nitrogen atmosphere. The solution in the three-necked flask became transparent about 30 minutes after the stirring was started. After the temperature of the transparent solution was returned to room temperature, triethylamine (17.0 mL) was added thereto, then, a DMAc (0.5 L) solution of lauroyl chloride (14.8 mL) was added dropwise thereto, and the solution was allowed to react by being stirred in a nitrogen atmosphere while heating to 120°C. After 3 hours, distilled water (2.0 L) was added to the reaction solution in the three-necked flask, and as a result, a white precipitate was produced. The produced white precipitate was separated by suction filtration, whereby a white precipitate was obtained. The white precipitate was washed with a mixed solvent (900 mL) of methanol-chloroform (2/1) and separated by suction filtration, and the resultant product was dried by air overnight and further dried by heating (at 90°C, for 2 hours) under reduced pressure, whereby a target product (lauroyl group-introduced paramylon, hereinafter, referred to as "Derivative T27 (Lau)") was obtained.

### (Preparation Example 58) Preparation of Lauroyl Group/Acetyl Group-Introduced Paramylon

The derivative T27 (Lau) (12.0 g) obtained in Preparation Example 57, lithium chloride (6.5 g), and DMAc (1.5 L) were put into a 2 L recovery flask, followed by stirring at 120°C for 1 hour in a nitrogen atmosphere. After stirring, the temperature of the solution which became homogeneous was cooled to 70°C, then, pyridine (168 mL) and acetic anhydride (240 mL) were added to the solution, and the resultant product was allowed to react by being stirred for 8 hours in a nitrogen atmosphere and at room temperature for 15 hours. After the reaction was completed, distilled water (3.0 L) was added to the reaction solution, as a result, a white precipitate was produced, and suction filtration was performed, whereby a white precipitate was obtained. The white precipitate was washed with water (1.6 L) and methanol (0.5 L), dried by air overnight, and further dried by heating (at 90°C (for 4 hours)) under reduced pressure, whereby a target product (paramylon derivative obtained by acetylation of lauroyl group-introduced paramylon, hereinafter, referred to as "Derivative T28 (Lau-Ac)") (16.7 g) was obtained.

¹H-NMR, ¹³C-NMR, and FT-IR measurement results of Derivative T28 (Lau-Ac) are shown below.
¹H-NMR(CDCl₃): δ 5.03-4.62 (m), 4.48-4.1 (m), 4.08-3.87 (m), 3.73-3.47 (m), 2.36-2.15 (m), 2.11 (s), 2.05 (s), 1.99 (s), 1.81-1.68 (m), 1.25 (s), 0.87 (t,J=6.9). ¹³C-NMR(CDCl₃): δ 173.4, 170.5, 169.1, 100.7, 78.4, 72.6, 71.7, 68.1, 62.0, 33.9, 31.9, 29.6, 29.5, 29.3, 29.2, 29.1, 24.6, 22.7, 21.5, 20.9, 20.7, 20.4, 14.1. FT-IR(cm⁻¹): 2928, 2858, 1747, 1369, 1218, 1031, 888.

The substitution degree, the number-average molecular weight (M_{N}), the heat resistance (Tg), the resistance to thermal decomposition (5% weight loss point), the thermoplasticity (MFR), and the water resistance (water absorption ratio) of each derivative were measured. All except for the number-average molecular weight (M_{N}) were measured in the same manner as in Example 2.

### (Measurement of Mass Average Molecular Weight)

The mass-average molecular weight (Mw) of each derivative synthesized was measured by a GPC method under the following conditions.
GPC apparatus: 1100 HPLC system (manufactured by Agilent Technologies) + MINIDAWN + QELS + OptilabreX (manufactured by Wyatt Technology Corporation),
Used column: KD-805 + K-802 (manufactured by Showa Denko K.K.),
Eluent: Chloroform
Flow rate: 1.0 mL/min

The measurement results are shown in Tables 4 and 5. In Table 4, among the "Substitution degree of long-chain hydrocarbon group" columns, "Total" indicates the substitution degree of a long-chain hydrocarbon group in the whole polymer, "Substitution degree of C2" indicates the substitution degree of a hydroxyl group at a carbon atom of the position 2 in a glucose unit, and "C6" indicates the substitution degree of a hydroxyl group at a carbon atom of the position 6 in a glucose unit. In addition, among the "Substitution degree of short-chain hydrocarbon group" columns, "Total" indicates the substitution degree of a short-chain hydrocarbon group in the whole polymer, "substitution degree of C2 + C4" indicates the summation of the substitution degrees of hydroxyl groups at carbon atoms of the positions 2 and 4 in a glucose unit, and "C6" indicates the substitution degree of a hydroxyl group at a carbon atom of the position 6 in a glucose unit. In addition, "-" in Tables indicates "measurement was not performed".

**[Table 4]**

| Derivative | Substitution degree of long-chain hydrocarbon group | | | Substitution degree of short-chain hydrocarbon group | | | Mw (x 10⁴) | MFR (g/10min) |
|---|---|---|---|---|---|---|---|---|
| | Total | C2 | C6 | Total | C2 + C4 | C6 | | |
| Derivative T2 (Myr-Ac) | 0.32 | 0.13 | 0.19 | 2.49 | 1.54 | 0.76 | 15.31 | 1181 |
| Derivative T4 (Myr-Ac) | 0.61 | - | - | 2.23 | - | - | 3.86 | 1354 |
| Derivative TX2 (Myr-Ac) | 0.32 | - | - | - | - | - | 36.01 | 1030 |
| Derivative TX4 (Myr-Ac) | 0.1 | - | - | - | - | - | 15.28 | 1050 |
| Derivative T6 (Pam-Ac) | 0.29 | 0.12 | 0.17 | 2.41 | 1.23 | 0.78 | 29.39 | 734 |
| Derivative T8 (Pam-Ac) | 0.5 | 0.13 | 0.37 | 2.02 | 1.56 | 0.59 | 5.02 | 1721 |
| Derivative T10 (Ste-Ac) | 0.31 | 0.12 | 0.19 | 2.33 | 1.28 | 0.75 | 26.31 | 948 |
| Derivative T12 (Ste-Ac) | 0.46 | - | - | 1.7 | 1.40 | 0.30 | 7.53 | 1289 |
| Derivative TX6 (Ste-Ac) | 0.11 | 0.02 | 0.09 | 2.22 | 1.36 | 0.86 | 36.82 | 472 |
| Derivative T14 (Dec-Ac) | 0.17 | 0.06 | 0.11 | 2.42 | 1.61 | 0.81 | 13.67 | 1352 |
| Derivative T16 (Dec-Ac) | 0.26 | 0.13 | 0.13 | 2.2 | 1.43 | 0.77 | 33.9 | 1249 |
| Derivative T18 (Und-Ac) | 0.25 | 0.05 | 0.20 | 2.33 | 1.44 | 0.89 | 13.71 | 92.5 |
| Derivative T20 (Lau-Ac) | 0.14 | - | - | 2.13 | 1.30 | 0.83 | 19.66 | 1.02 |
| Derivative T22 (Lau-Ac) | 0.26 | 0.05 | 0.21 | 2.49 | 1.67 | 0.82 | 21 | 678 |
| Derivative T24 (Tri-Ac) | 0.16 | 0.05 | 0.11 | 2.2 | 1.31 | 0.89 | 35.66 | 1003 |
| Derivative T26 (Ste-Ac) | 0.05 | - | - | 2.69 | - | - | 24.51 | - |
| Derivative T28 (Lau-Ac) | 0.54 | 0.20 | 0.34 | 2.12 | 1.37 | 0.75 | 13.30 | 1105 |

**[Table 5]**

| Derivative | Tg (°C) | 5% weight loss point (°C) | Water absorption ratio (%) |
|---|---|---|---|
| Derivative T4 (Myr-Ac) | 94 | 336 | - |
| Derivative TX2 (Myr-Ac) | - | - | - |
| Derivative TX4 (Myr-Ac) | - | - | - |
| Derivative T6 (Pam-Ac) | 131 | 351 | 2.27, 2.11 (Ave:2.19) |
| Derivative T10 (Ste-Ac) | 127 | 351 | 2.04, 2.02 (Ave:2.03) |

In Table 6, the MFR values for respective numbers of carbon atoms (in Table, "Number of carbon atoms") of long-chain hydrocarbon groups introduced are shown for derivatives having a substitution degree of about 0.15. In the same manner, in Table 7, the MFR values for respective numbers of carbon atoms of long-chain hydrocarbon groups introduced are shown for derivatives having a substitution degree of about 0.3. From these results, it was observed that the MFR value tended to be lowered when the number of carbon atoms was around 11 to 12, and tended to be increased when the number of carbon atoms was 13 or more. The result suggests that the molecular assembly mode of paramylon derivatives changes dramatically when the number of carbon atoms is around 11 to 12.

**[Table 6]**

| Derivative | Number of carbon atoms | MFR (g/10min) |
|---|---|---|
| Derivative T14 (Dec-Ac) | 10 | 1352 |
| Derivative T20 (Lau-Ac) | 12 | 1.02 |
| Derivative T24 (Tri-Ac) | 13 | 1003 |
| Derivative TX4 (Myr-Ac) | 14 | 1050 |
| Derivative TX6 (Ste-Ac) | 18 | 472 |

**[Table 7]**

| Derivative | Number of carbon atoms | MFR (g/10min) |
|---|---|---|
| Derivative T16 (Dec-Ac) | 10 | 1249 |
| Derivative T18 (Und-Ac) | 11 | 92.5 |
| Derivative T22 (Lau-Ac) | 12 | 678 |
| Derivative T2 (Myr-Ac) | 14 | 1181 |
| Derivative T6 (Pam-Ac) | 16 | 734 |
| Derivative T10 (Ste-Ac) | 18 | 948 |

### (Melt Spinning)

The melt spinning of Derivative T2 (Myr-Ac), Derivative T4 (Myr-Ac), Derivative T6 (Pam-Ac), Derivative T8 (Pam-Ac), Derivative T10 (Ste-Ac), Derivative T12 (Ste-Ac), Derivative T14 (Dec-Ac), Derivative T16 (Dec-Ac), Derivative T22 (Lau-Ac), Derivative T24 (Tri-Ac), and Derivative T28 (Lau-Ac) was performed.

Specifically, first, about 1.0 g of each derivative synthesized was put into the heating furnace of a commercially available melt extrusion spinning apparatus (melt extrusion apparatus, product name: IMC-1149, manufactured by Imoto machinery Co., Ltd.). Next, the temperature of the heating furnace and a thread-making die were set to 200°C to 250°C, then, extrusion was performed at an extrusion speed of 0.2 mm/sec, and spinning was performed by winding using a commercially available winding apparatus (winding apparatus (standard A), product name: IMC-1128-A, manufactured by Imoto machinery Co., Ltd.).

As a result, all of the derivatives were able to be melt-spinned without a plasticizer.

### [Example 4]

Various paramylon derivatives which were obtained by introducing a long-chain hydrocarbon group, a propyl group, or a phenyl group into paramylon derived from Euglena gracilis were prepared, and the thermoplasticity was examined.

### (Preparation Example 59) Preparation of Myristoyl Group-Introduced Paramylon (load ratio: [myristoyl chloride] / [glucose unit] = 0.5)

Paramylon (10.0 g), lithium chloride (7.8 g), and DMAc (0.5 L) were put into a 2 L three-necked flask, followed by stirring at 120°C in a nitrogen atmosphere. The solution in the three-necked flask became transparent about 1 hour after the stirring was started. After the temperature of the transparent solution was returned to room temperature, triethylamine (43 mL) was added thereto, then, a DMAc (0.5 L) solution of myristoyl chloride (8.4 mL) was added dropwise thereto, and the solution was allowed to react by being stirred in a nitrogen atmosphere while heating to 120°C. After 3 hours, methanol (2.0 L) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (900 mL) of methanol-chloroform (2/1) and separated by suction filtration, and the resultant product was dried by air overnight and further dried by heating (at 70°C, for 2 hours) under reduced pressure, whereby a target product (myristoyl group-introduced paramylon, hereinafter, referred to as "Derivative U1 (Myr)") (11.7 g) was obtained.

### (Preparation Example 60) Preparation of Myristoyl Group/Benzoyl Group-Introduced Paramylon

The derivative U1 (Myr) (11.0 g) obtained in Preparation Example 59, lithium chloride (6.2 g), and DMAc (0.5 L) were put into a 2 L three-necked flask, followed by stirring at 120°C in a nitrogen atmosphere. The solution in the three-necked flask became transparent about 1 hour after the stirring was started. After the temperature of the transparent solution was returned to room temperature, DMAc (1.0 L), pyridine (160 mL), and benzoyl chloride (56.7 mL) were added dropwise thereto, and the solution was allowed to react by being stirred in a nitrogen atmosphere while heating to 120°C. After 3 hours, methanol (1.0 L) and distilled water (1.0 L) were added to the reaction solution in the three-necked flask, and as a result, a white precipitate was produced. The supernatant was removed from the reaction solution by a centrifugal separation treatment, whereby a white precipitate was obtained. The white precipitate was washed with methanol (1.6 L) and separated by suction filtration, and the resultant product was dried by air overnight and further dried by heating (at 90°C (for 4 hours) under reduced pressure, whereby a target product (paramylon derivative obtained by benzoylation of myristoyl group-introduced paramylon, hereinafter, referred to as "Derivative U2 (Myr-Bz)") (18.3 g) was obtained.

¹H-NMR and FT-IR measurement results of Derivative U2 (Myr-Bz) are shown below.
¹H-NMR(CDCl₃): δ 8.07-7.67 (m), 7.58-7.04 (m), 5.44-3.14 (m), 2.41-1.96 (m), 1.66-1.52 (m), 1.24 (s), 0.87 (s).
FT-IR(cm⁻¹): 2918, 2847, 1723, 1449, 1369, 1264, 1213, 1174, 1078, 1058, 1024, 891, 709.

### (Preparation Example 61) Preparation of Lauroyl Group-Introduced Paramylon (load ratio: [lauroyl chloride] / [glucose unit] = 0.5)

Paramylon (10.0 g), lithium chloride (7.8 g), and DMAc (0.5 L) were put into a 2 L three-necked flask, followed by stirring at 120°C in a nitrogen atmosphere. The solution in the three-necked flask became transparent about 1 hour after the stirring was started. After the temperature of the transparent solution was returned to room temperature, triethylamine (43 mL) was added thereto, then, a DMAc (0.5 L) solution of lauroyl chloride (7.3 mL) was added dropwise thereto, and the solution was allowed to react by being stirred in a nitrogen atmosphere while heating to 120°C. After 3 hours, distilled water (2.0 L) was added to the reaction solution in the three-necked flask, and as a result, a white precipitate was produced. The supernatant was removed from the reaction solution by a centrifugal separation treatment, whereby a white precipitate was obtained. The white precipitate was washed with methanol (400 mL), separated by suction filtration, and the resultant product was dried by air overnight and further dried by heating (at 70°C, for 2 hours) under reduced pressure, whereby a target product (myristoyl group-introduced paramylon, hereinafter, referred to as "Derivative U3 (Lau)") (11.7 g) was obtained.

### (Preparation Example 62) Preparation of Lauroyl Group/Benzoyl Group-Introduced Paramylon

The derivative U3 (Lau) (1.0 g) obtained in Preparation Example 61, lithium chloride (593 mg), and DMAc (50 L) were put into a 2 L three-necked flask, followed by stirring at 120°C in a nitrogen atmosphere. The solution in the three-necked flask became transparent about 1 hour after the stirring was started. After the temperature of the transparent solution was returned to room temperature, DMAc (100 mL), pyridine (15 mL), and benzoyl chloride (5.4 mL) were added dropwise thereto, and the solution was allowed to react by being stirred in a nitrogen atmosphere while heating to 120°C. After 3 hours, methanol (300 mL) and distilled water (300 mL) were added to the reaction solution in the three-necked flask, and as a result, a white precipitate was produced. The supernatant was removed from the reaction solution by a centrifugal separation treatment, whereby a white precipitate was obtained. The white precipitate was washed with methanol (160 mL) and separated by suction filtration, and the resultant product was dried by air overnight and further dried by heating (at 90°C (for 4 hours) under reduced pressure, whereby a target product (paramylon derivative obtained by benzoylation of lauroyl group-introduced paramylon, hereinafter, referred to as "Derivative U4 (Lau-Bz)") (1.5 g)) was obtained.

¹H-NMR and FT-IR measurement results of Derivative U4 (Lau-Bz) are shown below.
¹H-NMR(CDCl₃): δ 8.19-7.72 (m), 7.67-7.01 (m), 5.32-3.12 (m), 2.44-2.11 (m), 1.67-1.46 (m), 1.24 (s), 0.87 (s).
FT-IR(cm⁻¹): 29123, 2855, 1719, 1451, 1372, 1267, 1175, 1090, 1067, 1025, 709.

### (Preparation Example 63) Preparation of Myristoyl Group-Introduced Paramylon (load ratio: [myristoyl chloride] / [glucose unit] = 0.5)

Paramylon (10.0 g), lithium chloride (7.8 g), and DMAc (0.5 L) were put into a 2 L three-necked flask, followed by stirring at 120°C in a nitrogen atmosphere. The solution in the three-necked flask became transparent about 1 hour after the stirring was started. After the temperature of the transparent solution was returned to room temperature, triethylamine (8.6 mL) was added thereto, then, a DMAc (0.5 L) solution of myristoyl chloride (8.4 mL) was added dropwise thereto, and the solution was allowed to react by being stirred in a nitrogen atmosphere while heating to 120°C. After 3 hours, methanol (2.0 L) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (900 mL) of methanol-chloroform (2/1) and separated by suction filtration, and the resultant product was dried by air overnight and further dried by heating (at 70°C, for 2 hours) under reduced pressure, whereby a target product (myristoyl group-introduced paramylon, hereinafter, referred to as "Derivative U5 (Myr)") (10.0 g) was obtained.

### (Preparation Example 64) Preparation of Myristoyl Group/Propanoyl Group-Introduced Paramylon

The derivative U5 (Myr) (9.8 g) obtained in Preparation Example 63, lithium chloride (6.5 g), and DMAc (1.5 L) were put into a 2 L recovery flask, followed by stirring at 120°C for 1 hour in a nitrogen atmosphere. After stirring, the temperature of the solution which became homogeneous was cooled to 70°C, then, pyridine (168 mL) and propionic anhydride (360 mL) were added to the solution, and the resultant product was allowed to react by being stirred for 7 hours in a nitrogen atmosphere and at room temperature for 15 hours. After the reaction was completed, distilled water (3.0 L) was added to the reaction solution, as a result, a white precipitate was produced, and suction filtration was performed, whereby a white precipitate was obtained. The white precipitate was washed with water (1.6 L) and methanol (0.3 L), dried by air overnight, and further dried by heating (at 90°C (for 4 hours)) under reduced pressure, whereby a target product (paramylon derivative obtained by propanoylation of myristoyl group-introduced paramylon, hereinafter, referred to as "Derivative U6 (Myr-Pr)") (10.7 g) was obtained.

¹H-NMR and FT-IR measurement results of Derivative U6 (Myr-Pr) are shown below.
¹H-NMR(CDCl₃): δ 5.11-3.16 (m), 2.62-2.45 (m), 2.39-2.16 (m), 1.77-1.47 (m), 1.24 (s), 1.18-0.96 (br), 0.86 (t,J=6.8).
FT-IR(cm⁻¹): 3484, 2976, 2923, 2853, 1739, 1461, 1419, 1363, 1271, 1160, 1055, 871, 806, 563.

### (Preparation Example 65) Preparation of Stearoyl Group-Introduced Paramylon (load ratio: [stearoyl chloride] / [glucose unit] = 0.5)

Paramylon (10.0 g), lithium chloride (7.8 g), and DMAc (0.5 L) were put into a 2 L three-necked flask, followed by stirring at 120°C in a nitrogen atmosphere. The solution in the three-necked flask became transparent about 1 hour after the stirring was started. After the temperature of the transparent solution was returned to room temperature, triethylamine (43 mL) was added thereto, then, a DMAc (0.5 L) solution of stearoyl chloride (10.4 mL) was added dropwise thereto, and the solution was allowed to react by being stirred in a nitrogen atmosphere while heating to 120°C. After 3 hours, a mixed solvent (1.8 L) of methanol-chloroform (2/1) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (900 mL) of methanol-chloroform (2/1) and separated by suction filtration, and the resultant product was dried by air overnight and further dried by heating (at 70°C, for 2 hours) under reduced pressure, whereby a target product (stearoyl group-introduced paramylon, hereinafter, referred to as "Derivative U7 (Ste)") (14.2 g) was obtained.

### (Preparation Example 66) Preparation of Stearoyl Group/Propanoyl Group-Introduced Paramylon

The derivative U7 (Ste) (14.2 g) obtained in Preparation Example 65, lithium chloride (6.5 g), and DMAc (1.5 L) were put into a 2 L recovery flask, followed by stirring at 120°C for 1 hour in a nitrogen atmosphere. After stirring, the temperature of the solution which became homogeneous was cooled to 70°C, then, pyridine (168 mL) and propionic anhydride (360 mL) were added to the solution, and the resultant product was allowed to react by being stirred for 7 hours in a nitrogen atmosphere and at room temperature for 15 hours. After the reaction was completed, distilled water (3.0 L) was added to the reaction solution, as a result, a white precipitate was produced, and suction filtration was performed, whereby a white precipitate was obtained. The white precipitate was washed with water (1.6 L) and methanol (0.3 L), dried by air overnight, and further dried by heating (at 90°C (for 4 hours)) under reduced pressure, whereby a target product (paramylon derivative obtained by propanoylation of myristoyl group-introduced paramylon, hereinafter, referred to as "Derivative U8 (Ste-Pr)") (15.5 g) was obtained.

¹H-NMR and FT-IR measurement results of Derivative U8 (Ste-Pr) are shown below.
¹H-NMR(CDCl₃): δ 5.13-3.08 (m), 2.61-2.42 (m), 2.39-2.13 (m), 1.87-1.64 (m), 1.23 (s), 1.20-0.96 (br), 0.86 (t,J=6.9).
FT-IR(cm⁻¹): 2977, 2915, 2848, 1739, 1461, 1418, 1361, 1270, 1160, 1057, 869, 805, 561.

### (Preparation Example 67) Preparation of Lauroyl Group-Introduced Paramylon (load ratio: [lauroyl chloride] / [glucose unit] = 0.5)

Paramylon (10.0 g), lithium chloride (7.9 g), and DMAc (0.5 L) were put into a 2 L three-necked flask, followed by stirring at 120°C in a nitrogen atmosphere. The solution in the three-necked flask became transparent about 1 hour after the stirring was started. After the temperature of the transparent solution was returned to room temperature, triethylamine (43 mL) was added thereto, then, a DMAc (0.5 L) solution of lauroyl chloride (7.3 mL) was added dropwise thereto, and the solution was allowed to react by being stirred in a nitrogen atmosphere while heating to 120°C. After 3 hours, distilled water (2.0 L) was added to the reaction solution in the three-necked flask, and as a result, a white precipitate was produced. The supernatant was removed from the reaction solution by a centrifugal separation treatment, whereby a white precipitate was obtained. The white precipitate was washed with a mixed solvent (900 mL) of methanol-chloroform (2/1) and separated by suction filtration, and the resultant product was dried by air overnight and further dried by heating (at 70°C, for 2 hours) under reduced pressure, whereby a target product (stearoyl group-introduced paramylon, hereinafter, referred to as "Derivative U9 (Lau)") (11.6 g) was obtained.

### (Preparation Example 68) Preparation of Lauroyl Group/Propanoyl Group-Introduced Paramylon

The derivative U9 (Lau) (11.6 g) obtained in Preparation Example 67, lithium chloride (6.5 g), and DMAc (1.5 L) were put into a 2 L recovery flask, followed by stirring at 120°C for 1 hour in a nitrogen atmosphere. After stirring, the temperature of the solution which became homogeneous was cooled to 70°C, then, pyridine (168 mL) and propionic anhydride (360 mL) were added to the solution, and the resultant product was allowed to react by being stirred for 7 hours in a nitrogen atmosphere and at room temperature for 15 hours. After the reaction was completed, distilled water (3.0 L) was added to the reaction solution, as a result, a white precipitate was produced, and suction filtration was performed, whereby a white precipitate was obtained. The white precipitate was washed with water (1.6 L) and methanol (0.3 L), dried by air overnight, and further dried by heating (at 90°C (for 4 hours)) under reduced pressure, whereby a target product (paramylon derivative obtained by propanoylation of myristoyl group-introduced paramylon, hereinafter, referred to as "Derivative U10 (Lau-Pr)") (12.7 g) was obtained.

¹H-NMR and FT-IR measurement results of Derivative U10 (Lau-Pr) are shown below.
¹H-NMR(CDCl₃): δ 5.21-3.05 (m), 2.66-2.42 (m), 2.39-2.15 (m), 1.77-1.61 (m), 1.24 (s), 1.20-0.96 (br), 0.86 (t,J=6.6).
FT-IR(cm⁻¹): 3484, 2975, 2923, 2852, 1739, 1458, 1418, 1363, 1268, 1162, 1053, 871, 805,561.

The substitution degree of each derivative was measured in the same manner as in Example 2. In addition, the mass-average molecular weight (Mw) of each derivative was measured in the same manner as in Example 3. The measurement results are shown in Table 8. In "substitution degree" columns in Table 8, "-" indicates that measurement was not performed.

### (Thermoplasticity Test Using Hot Plate)

Each derivative was placed on a hot plate, and while slowly raising the temperature from room temperature, the temperature at which the thermoplasticity (thermoplasticity exhibition temperature (°C)) was exhibited was examined. The measurement results are shown with a load ratio ([long-chain fatty acid chloride] / [glucose unit]) at the time of preparation in Table 8. As a result, all of the derivatives exhibited the thermoplasticity at 200°C or higher.

**[Table 8]**

| Derivative | Load ratio | Substitution degree of long-chain hydrocarbon group | Substitution degree of Bz group or Pr group | Mw (x 10⁴) | Thermoplasticity exhibition temperature |
|---|---|---|---|---|---|
| Derivative U2 (Myr-Bz) | 0.5 | 0.30 | 1.56 | 37.78 | Around 220°C |
| Derivative U4 (Lau-Bz) | 0.5 | 0.32 | 1.15 | 50.44 | Around 210°C |
| Derivative U6 (Myr-Pr) | 0.5 | 0.24 | 2.01 | 43.82 | Around 240°C |
| Derivative U8 (Ste-Pr) | 0.5 | 0.36 | 2.49 | 123 | Around 220°C |
| Derivative U10 (Lau-Pr) | 0.5 | 0.34 | 1.99 | 29.03 | Around 230°C |

### [Example 5]

Various paramylon derivatives which were obtained by introducing only a long-chain hydrocarbon group into paramylon derived from Euglena gracilis were prepared, and the thermoplasticity was examined.

### (Preparation Example 69) Preparation of Paramylon 2-Ethylhexanoate (load ratio: [2-ethylhexanoyl chloride] / [glucose unit] = 3.0)

Paramylon (199.5 mg) and pyridine (20.0 mL) were put into a 50 mL recovery flask, followed by stirring at 110°C for 1 hour in a nitrogen atmosphere. Next, 2-ethylhexanoyl chloride (528 µL) was added thereto, followed by stirring in a nitrogen atmosphere. After stirring for 3 hours, methanol (200 mL) was added to the reaction solution, and as a result, a white precipitate was produced. The white precipitate was collected by centrifugal separation, and the resultant product was washed with methanol (35 mL x 2 times) and dried by air, whereby a target product (2-ethylhexanoyl group-introduced paramylon, hereinafter, referred to as "Derivative S1 (2E-Hex)") (275 mg) was obtained.

FT-IR measurement result of Derivative S1 (2E-Hex) is shown below. FT-IR(cm⁻¹): 2914, 2854, 1730, 1456, 1161, 1034, 1033.

### (Preparation Example 70) Preparation of Paramylon 2-Ethylhexanoate (load ratio: [2-ethylhexanoyl chloride] / [glucose unit] = 2.5)

Paramylon (202 mg) and pyridine (20.0 mL) were put into a 50 mL recovery flask, followed by stirring at 110°C for 1 hour in a nitrogen atmosphere. Next, 2-ethylhexanoyl chloride (635 µL) was added thereto, followed by stirring in a nitrogen atmosphere. After stirring for 3 hours, methanol (160 mL) was added to the reaction solution, and as a result, a white precipitate was produced. The white precipitate was collected by centrifugal separation, and the resultant product was washed with methanol (35 mL x 2 times) and dried by air, whereby a target product (2-ethylhexanoyl group-introduced paramylon, hereinafter, referred to as "Derivative S2 (2E-Hex)") (309 mg) was obtained.

FT-IR measurement result of Derivative S2 (2E-Hex) is shown below. FT-IR(cm⁻¹): 2920, 2857, 1731, 1455, 1361, 1162, 1047, 1031.

### (Preparation Example 71) Preparation of Paramylon Octanoate (load ratio: [octanoyl chloride] / [glucose unit] = 2.5)

Paramylon (101 mg) and pyridine (10.0 mL) were put into a 50 mL recovery flask, followed by stirring at 110°C for 1 hour in a nitrogen atmosphere. Next, octanoyl chloride (264 µL) was added thereto, followed by stirring in a nitrogen atmosphere. After stirring for 3 hours, methanol (120 mL) was added to the reaction solution, and as a result, a white precipitate was produced. The white precipitate was collected by centrifugal separation, and the resultant product was washed with methanol (30 mL x 2 times) and dried by air, whereby a target product (octanoyl group-introduced paramylon, hereinafter, referred to as "Derivative S3 (Oct)") (233 mg) was obtained.

¹H-NMR and FT-IR measurement results of Derivative S3 (Oct) are shown below.
¹H-NMR(CDCl₃): δ 5.16-3.15 (m), 2.48-2.15 (m), 1.77-1.49 (m), 1.28 (s), 0.88 (s). FT-IR(cm⁻¹): 2919, 2852, 1739, 1455, 1361, 1150, 1041, 1040.

### (Preparation Example 72) Preparation of Paramylon Octanoate (load ratio: [octanoyl chloride] / [glucose unit] = 3.0)

Paramylon (99 mg) and pyridine (10.0 mL) were put into a 50 mL recovery flask, followed by stirring at 110°C for 1 hour in a nitrogen atmosphere. Next, octanoyl chloride (317 µL) was added thereto, followed by stirring in a nitrogen atmosphere. After stirring for 3 hours, methanol (120 mL) was added to the reaction solution, and as a result, a white precipitate was produced. The white precipitate was collected by centrifugal separation, and the resultant product was washed with methanol (30 mL x 2 times) and dried by air, whereby a target product (octanoyl group-introduced paramylon, hereinafter, referred to as "Derivative S4 (Oct)") (250 mg) was obtained.

¹H-NMR and FT-IR measurement results of Derivative S4 (Oct) are shown below.
¹H-NMR(CDCl₃): δ 5.13-3.00 (m), 2.38-2.14 (m), 1.65-1.48 (m), 1.27 (s), 0.88 (s). FT-IR(cm⁻¹): 2923, 2854, 1743, 1149, 1047.

### (Preparation Example 73) Preparation of Paramylon Decanoate (load ratio: [decanoyl chloride] / [glucose unit] = 2.5)

Paramylon (99 mg) and pyridine (10.0 mL) were put into a 50 mL recovery flask, followed by stirring at 110°C for 1 hour in a nitrogen atmosphere. Next, decanoyl chloride (316 µL) was added thereto, followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol (30 mL x 2 times) and dried by air, whereby a target product (octanoyl group-introduced paramylon, hereinafter, referred to as "Derivative S5 (Dec)") (251 mg) was obtained.

¹H-NMR and FT-IR measurement results of Derivative S5 (Dec) are shown below.
¹H-NMR(CDCl₃): δ 5.18-3.14 (m), 2.54-2.12 (m), 1.75-1.47 (m), 1.26 (s), 0.88 (t,J=6.3). FT-IR(cm⁻¹): 2920, 2851, 1739, 1455, 1360, 1147, 1042.

### (Preparation Example 74) Preparation of Paramylon Decanoate (load ratio: [decanoyl chloride] / [glucose unit] = 3.0)

Paramylon (103 mg) and pyridine (10.0 mL) were put into a 50 mL recovery flask, followed by stirring at 110°C for 1 hour in a nitrogen atmosphere. Next, decanoyl chloride (380 µL) was added thereto, followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol (30 mL x 2 times) and dried by air, whereby a target product (octanoyl group-introduced paramylon, hereinafter, referred to as "Derivative S6 (Dec)") (260 mg) was obtained.

¹H-NMR and FT-IR measurement results of Derivative S6 (Dec) are shown below.
¹H-NMR(CDCl₃): δ 5.14-3.15 (m), 2.43-2.1 (m), 1.72-1.48 (m), 1.26 (s), 0.88 (t,J=6.1). FT-IR(cm⁻¹): 2918, 2850, 1739, 1146, 1040.

### (Preparation Example 75) Preparation of Paramylon Laurate (load ratio: [lauroyl chloride] / [glucose unit] = 2.5)

Paramylon (101 mg) and pyridine (10.0 mL) were put into a 50 mL recovery flask, followed by stirring at 110°C for 1 hour in a nitrogen atmosphere. Next, lauroyl chloride (367 µL) was added thereto, followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol (30 mL x 2 times) and dried by air, whereby a target product (lauroyl group-introduced paramylon, hereinafter, referred to as "Derivative S7 (Lau)") (306 mg) was obtained.

¹H-NMR and FT-IR measurement results of Derivative S7 (Lau) are shown below.
¹H-NMR(CDCl₃): δ 5.21-3.12 (m), 2.59-2.12 (m), 1.81-1.46 (m), 1.26 (s), 0.88 (t,J=6.3). FT-IR(cm⁻¹): 2918, 2849, 1740, 1455, 1360, 1145, 1045.

### (Preparation Example 76) Preparation of Paramylon Laurate (load ratio: [lauroyl chloride] / [glucose unit] = 3.0)

Paramylon (102 mg) and pyridine (10.0 mL) were put into a 50 mL recovery flask, followed by stirring at 110°C for 1 hour in a nitrogen atmosphere. Next, lauroyl chloride (440 µL) was added thereto, followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol (30 mL x 2 times) and dried by air, whereby a target product (lauroyl group-introduced paramylon, hereinafter, referred to as "Derivative S8 (Lau)") (336 mg) was obtained.

FT-IR measurement result of Derivative S8 (Lau) is shown below. FT-IR(cm⁻¹): 2918, 2850, 1742, 1455, 1142, 1042.

### (Preparation Example 77) Preparation of Paramylon Myristate (load ratio: [myristoyl chloride] / [glucose unit] = 2.0)

Paramylon (103 mg), DMAc (5.0 mL), and LiCl (88 mL) were put into a 50 mL recovery flask, followed by stirring at 110°C for 1 hour in a nitrogen atmosphere. After the reaction solution was cooled to 40°C, triethylamine (258 µL) and DMAc/myristoyl chloride (2.5 mL/335 µL) were added thereto, and the resultant product was heated again (110°C), followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol (30 mL x 4 times) and dried by air, whereby a target product (myristoyl group-introduced paramylon, hereinafter, referred to as "Derivative S9 (Myr)") (232 mg) was obtained.

FT-IR measurement result of Derivative S9 (Myr) is shown below. FT-IR(cm⁻¹): 3362, 2915, 2848, 1717, 1435, 1357, 1107, 1069, 1028.

### (Preparation Example 78) Preparation of Paramylon Myristate (load ratio: [myristoyl chloride] / [glucose unit] = 2.4)

Paramylon (50 mg) and pyridine (5.0 mL) were put into a 50 mL recovery flask, followed by stirring at 110°C for 1 hour in a nitrogen atmosphere. Next, myristoyl chloride (200 µL) was added thereto, followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol (30 mL x 2 times) and dried by air, whereby a target product (myristoyl group-introduced paramylon, hereinafter, referred to as "Derivative S10 (Myr)") (174 mg) was obtained.

¹H-NMR and FT-IR measurement results of Derivative S10 (Myr) are shown below.
¹H-NMR(CDCl₃): δ 5.23-3.09 (m), 2.42-2.16 (m), 1.55-1.51 (m), 1.25 (s), 0.88 (t,J=6.6). FT-IR(cm⁻¹): 3335, 2918, 2850, 1739, 1626, 1455, 1355, 1151, 1076.

### (Preparation Example 79) Preparation of Paramylon Myristate (load ratio: [myristoyl chloride] / [glucose unit] = 2.6)

Paramylon (50 mg) and pyridine (5.0 mL) were put into a 50 mLrecovery flask, followed by stirring at 110°C for 1 hour in a nitrogen atmosphere. Next, myristoyl chloride (220 µL) was added thereto, followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol (30 mL x 2 times) and dried by air, whereby a target product (myristoyl group-introduced paramylon, hereinafter, referred to as "Derivative S11 (Myr)") (122 mg) was obtained.

¹H-NMR and FT-IR measurement results of Derivative S11 (Myr) are shown below.
¹H-NMR(CDCl₃): δ 5.13-3.11 (m), 2.45-2.17 (m), 1.73-1.48 (m), 1.26 (s), 0.88 (t,J=6.5). FT-IR(cm⁻¹): 2920, 2851, 1743, 1459, 1377, 1162, 1082.

### (Preparation Example 80) Preparation of Paramylon Myristate (load ratio: [myristoyl chloride] / [glucose unit] = 3.0)

Paramylon (101 mg), DMAc (5.0 mL), and LiCl (85 mL) were put into a 50 mL recovery flask, followed by stirring at 110°C for 1 hour in a nitrogen atmosphere. After the reaction solution was cooled to 40°C (388 µL) and DMAc/myristoyl chloride (2.5 mL/503 µL) were added thereto, and the resultant product was heated again (110°C), followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol (35 mL x 3 times) and dried by air, whereby a target product (myristoyl group-introduced paramylon, hereinafter, referred to as "Derivative S12 (Myr)") (82 mg) was obtained.

FT-IR measurement result of Derivative S12 (Myr) is shown below. FT-IR(cm⁻¹): 2919, 2851, 1743, 1465, 1371, 1159, 1075.

### (Preparation Example 81) Preparation of Paramylon Palmitate (load ratio: [palmitoyl chloride] / [glucose unit] = 2.6)

Paramylon (50 mg) and pyridine (5.0 mL) were put into a 50 mL recovery flask, followed by stirring at 110°C for 1 hour in a nitrogen atmosphere. Next, palmitoyl chloride (242 µL) was added thereto, followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol (35 mL x 2 times) and dried by air, whereby a target product (palmitoyl group-introduced paramylon, hereinafter, referred to as "Derivative S14 (Pal)") (190 mg) was obtained.

¹H-NMR and FT-IR measurement results of Derivative S14 (Pal) are shown below.
¹H-NMR(CDCl₃): δ 5.13-3.09 (m), 2.47-2.18 (m), 1.67-1.49 (m), 1.26 (s), 0.88 (t,J=6.7). FT-IR(cm⁻¹): 2921, 2853, 1744, 1465, 1372, 1161, 1084.

### (Preparation Example 82) Preparation of Paramylon Palmitate (load ratio: [palmitoyl chloride] / [glucose unit] = 2.6)

Paramylon (3.02 g) and pyridine (300 mL) were put into a 1 L recovery flask, followed by stirring at 110°C for 1 hour in a nitrogen atmosphere. Next, palmitoyl chloride (14.5 mL) was added thereto, followed by stirring in a nitrogen atmosphere. After stirring for 3 hours, methanol (1200 mL) was added to the reaction solution, and as a result, a white precipitate was produced. The white precipitate was collected by centrifugal separation, and the resultant product was washed with chloroform/methanol (2/1, 300 mL) and dried by air, whereby a target product (palmitoyl group-introduced paramylon, hereinafter, referred to as "Derivative S15 (Pal)") (10.66 g) was obtained.

¹H-NMR and FT-IR measurement results of Derivative S15 (Pal) are shown below.
¹H-NMR(CDCl₃): δ 5.16-3.17 (m), 2.50-2.16 (m), 1.77-1.50 (m), 1.26 (s), 0.88 (t,J=6.6). FT-IR(cm⁻¹): 2929, 2854, 1748, 1540, 1507, 1456, 1372, 1210, 1033.

### (Preparation Example 83) Preparation of Paramylon Palmitate (load ratio: [palmitoyl chloride] / [glucose unit] = 3.0)

Paramylon (98 mg), DMAc (5.0 mL), and LiCl (98 mg) were put into a 50 mL recovery flask, followed by stirring at 110°C for 1 hour in a nitrogen atmosphere. After the reaction solution was cooled to 40°C, triethylamine (388 µL) and DMAc/palmitoyl chloride (2.5 mL/561 µL) were added thereto, and the resultant product was heated again (110°C), followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol (30 mL x 3 times) and dried by air, whereby a target product (palmitoyl group-introduced paramylon, hereinafter, referred to as "Derivative S16 (Pal)") (381 mg) was obtained.

FT-IR measurement result of Derivative S16 (Pal) is shown below. FT-IR(cm⁻¹): 2917, 2850, 1742, 1577, 1464, 1371, 1161, 1077.

### (Preparation Example 84) Preparation of Paramylon Stearate (load ratio: [stearoyl chloride] / [glucose unit] = 2.5)

Paramylon (50 mg) and pyridine (5.0 mL) were put into a 50 mL recovery flask, followed by stirring at 110°C for 1 hour in a nitrogen atmosphere. Next, stearoyl chloride (260 µL) was added thereto, followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol and a mixed solvent (30 mL x 2 times) of methanol-chloroform (2/1) and dried by air, whereby a target product (stearoyl group-introduced paramylon, hereinafter, referred to as "Derivative S17 (Ste)") (150 mg) was obtained.

¹H-NMR and FT-IR measurement results of Derivative S17 (Ste) are shown below.
¹H-NMR(CDCl₃): δ 5.12-3.08 (m), 2.42-2.12 (m), 1.67-1.51 (m), 1.26 (s), 0.88 (t,J=6.9) FT-IR(cm⁻¹): 2918, 2851, 1745, 1458, 1163, 1082.

### (Preparation Example 85) Preparation of Paramylon Stearate (load ratio: [stearoyl chloride] / [glucose unit] = 3.0)

Paramylon (49 mg) and pyridine (5.0 mL) were put into a 50 mL recovery flask, followed by stirring at 110°C for 1 hour in a nitrogen atmosphere. Next, stearoyl chloride (312µL) was added thereto, followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol (30 mL) and a mixed solvent (30 mL x 2 times) of methanol-chloroform (2/1) and dried by air, whereby a target product (stearoyl group-introduced paramylon, hereinafter, referred to as "Derivative S18 (Ste)") (190 mg) was obtained.

¹H-NMR and FT-IR measurement results of Derivative S18 (Ste) are shown below.
¹H-NMR(CDCl₃): δ 5.18-3.11 (m), 2.44-2.05 (m), 1.67-1.49 (m), 1.26 (s), 0.88 (t,J=6.9). FT-IR(cm⁻¹): 2918, 2850, 1748, 1465, 1373, 1161, 1056.

### (Preparation Example 86) Preparation of Paramylon Laurate (load ratio: [lauroyl chloride] / [glucose unit] = 4.0)

Paramylon (51 mg) and pyridine (5.0 mL) were put into a 50 mL recovery flask, followed by stirring at 110°C for 1 hour in a nitrogen atmosphere. Next, lauroyl chloride (293 µL) was added thereto, followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol (30 mL x 3 times) and dried by air, whereby a target product (lauroyl group-introduced paramylon, hereinafter, referred to as "Derivative S19 (Lau)") (108 mg) was obtained.

FT-IR measurement result of Derivative S19 (Lau) is shown below. FT-IR(cm⁻¹): 3467, 2920, 2850, 1748, 1468, 1363, 1310, 1161, 1080.

### (Preparation Example 87) Preparation of Paramylon Palmitate (load ratio: [palmitoyl chloride] / [glucose unit] = 2.0)

Paramylon (102 mg), DMAc (5.0 mL), and LiCl (87 mg) were put into a 50 mL recovery flask, followed by stirring at 110°C for 1 hour in a nitrogen atmosphere. After the reaction solution was cooled to 40°C, triethylamine (258 µL) and DMAc/myristoyl chloride (2.5 mL/374 µL) were added thereto, and the resultant product was heated again (110°C), followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol (30 mL x 3 times) and dried by air, whereby a target product (palmitoyl group-introduced paramylon, hereinafter, referred to as "Derivative S20 (Pal)") (173 mg) was obtained.

FT-IR measurement result of Derivative S20 (Pal) is shown below. FT-IR(cm⁻¹): 3420, 2920, 2852, 1731, 1651, 1456, 1371, 1161, 1073, 1038.

### (Preparation Example 88) Preparation of Paramylon Palmitate (load ratio: [palmitoyl chloride] / [glucose unit] = 4.0)

Paramylon (103 mg), DMAc (5.0 mL), and LiCl (98 mg) were put into a 50 mL recovery flask, followed by stirring at 110°C for 1 hour in a nitrogen atmosphere. After the reaction solution was cooled to 40°C, triethylamine (516 µL) and DMAc/myristoyl chloride (2.5 mL/748 µL) were added thereto, and the resultant product was heated again (110°C), followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol (35 mL x 3 times) and dried by air, whereby a target product (palmitoyl group-introduced paramylon, hereinafter, referred to as "Derivative S21 (Pal)") (510 mg) was obtained.

FT-IR measurement result of Derivative S21 (Pal) is shown below. FT-IR(cm⁻¹): 3476, 2916, 2850, 1743, 1714, 1578, 1446, 1152, 1082.

### (Preparation Example 89) Preparation of Paramylon Stearate (load ratio: [stearoyl chloride] / [glucose unit] = 2.0)

Paramylon (50 mg) and pyridine (5.0 mL) were put into a 50 mL recovery flask, followed by stirring at 110°C for 1 hour in a nitrogen atmosphere. Next, stearoyl chloride (208 µL) was added thereto, followed by stirring in a nitrogen atmosphere. After stirring for 3 hours, methanol (20 mL) was added to the reaction solution, and as a result, a white precipitate was produced. The white precipitate was collected by centrifugal separation, and the resultant product was washed with methanol (30 mL x 3 times) and dried by air, whereby a target product (stearoyl group-introduced paramylon, hereinafter, referred to as "Derivative S22 (Ste)") (144 mg) was obtained.

FT-IR measurement result of Derivative S22 (Ste) is shown below. FT-IR(cm⁻¹): 3467, 2918, 2849, 1746, 1580, 1459, 1374, 1145, 1057, 898.

The substitution degree of each derivative was measured in the same manner as in Example 2. In addition, the thermoplasticity exhibition temperature (°C) of each derivative was measured in the same manner as in Example 4. The measurement results are shown with a load ratio ([long-chain fatty acid chloride] / [glucose unit]) at the time of preparation in Table 9. In "substitution degree" columns in Table 9, "-" indicates that measurement was not performed. In the "Thermoplasticity exhibition temperature" column in Table 9, "-" indicates that the thermoplasticity was not exhibited by heating to 300°C.

**[Table 9]**

| Derivative | Load ratio | Substitution degree | Thermoplasticity exhibition temperature |
|---|---|---|---|
| Derivative S1 (2E-Hex) | 3.0 | - | Around 245°C |
| Derivative S2 (2E-Hex) | 2.5 | - | Around 260°C |
| Derivative S3 (Oct) | 2.5 | 1.68 | Around 205°C |
| Derivative S4 (Oct) | 3.0 | 1.62 | Around 200°C |
| Derivative S5 (Dec) | 2.5 | 1.80 | Around 220°C |
| Derivative S6 (Dec) | 3.0 | 1.61 | Around 220°C |
| Derivative S7 (Lau) | 2.5 | 2.13 | Around 200°C |
| Derivative S8 (Lau) | 3.0 | - | Around 215°C |
| Derivative S9 (Myr) | 2.0 | - | Around 245°C |
| Derivative S10 (Myr) | 2.4 | 1.42 | Around 225°C |
| Derivative S11 (Myr) | 2.6 | 1.33 | Around 205°C |
| Derivative S12 (Myr) | 3.0 | - | Around 245°C |
| Derivative S14 (Pal) | 2.6 | 1.69 | Around 205°C |
| Derivative S15 (Pal) | 2.6 | 1.76 | Around 215°C |
| Derivative S16 (Pal) | 3.0 | - | Around 215°C |
| Derivative S17 (Ste) | 2.5 | 2.04 | Around 215°C |
| Derivative S18 (Ste) | 3.0 | 2.31 | Around 205°C |
| Derivative S19 (Lau) | 4.0 | - | - |
| Derivative S20 (Pal) | 2.0 | - | - |
| Derivative S21 (Pal) | 4.0 | - | - |
| Derivative S22 (Ste) | 2.0 | - | - |

As a result, the derivative which was prepared such that the load ratio was within a range of 2.5 to 3.0 exhibited the thermoplasticity at 200°C or higher. On the other hand, the prepared derivative tended not to exhibit the thermoplasticity when the load ratio was excessively low or high.

### (Rectangular Test Piece Manufacturing Test)

A rectangular test piece of the derivative exhibited the thermoplasticity at 200°C or higher was manufactured.

Specifically, a rectangular test piece having a length of 78 mm, a width of 12.4 mm, and a thickness of 2.4 mm was manufactured by injection-molding about 4.5 g of each derivative at a heating temperature of 200°C to 260°C using a simple injection molding machine (IMC-18D1 type, manufactured by Imoto machinery Co., Ltd.) and a dedicated mold.

As a result, it was possible to manufacture rectangular test pieces from each of the derivatives exhibited the thermoplasticity by an injection molding machine.

### Industrial Applicability

The β-1,3-glucan derivative of the present invention is suitable as plastic since the β-1,3-glucan derivative has excellent strength and thermoplasticity. In particular, the β-1,3-glucan derivative synthesized from β-1,3-glucan derived from plants such as paramylon is a plant-based plastic having low environmental impact. Therefore, a molded body having excellent biodegradability can be manufactured by molding the β-1,3-glucan derivative of the present invention.

## Claims

1. A β-1,3-glucan derivative represented by the following General Formula (1) as a main chain: 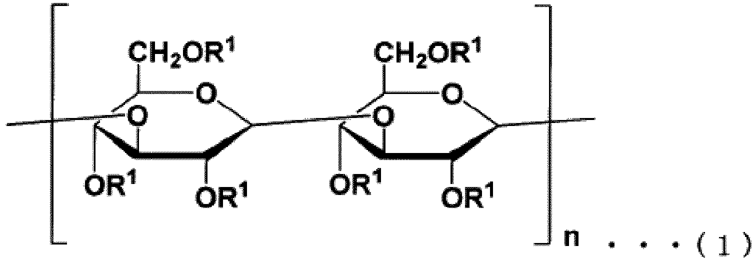
wherein, each of a plurality of R¹s independently represents a hydrogen atom or -COR², n represents an integer of 1 or greater, R² represents an aliphatic hydrocarbon group or an aromatic hydrocarbon group, and provided that-a part of a plurality of the R¹s is -COR²),
wherein the number of -COR²s per glucose unit in the β-1,3-glucan derivative is 0.1 or greater,
wherein at least a part of R²s in the β-1,3-glucan derivative is an aliphatic hydrocarbon group having 13 or more carbon atoms.

2. The β-1,3-glucan derivative according to Claim 1, which is a polymer represented by the following General Formula (1a): 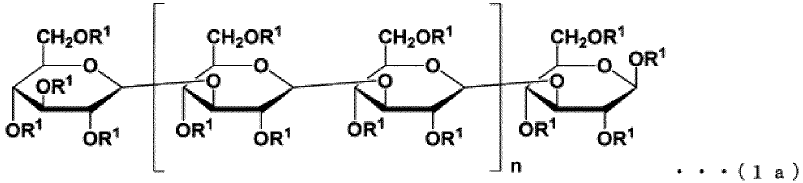 wherein, each of a plurality of R¹s independently represents a hydrogen atom or -COR², n represents an integer of 1 or greater, R² represents an aliphatic hydrocarbon group or an aromatic hydrocarbon group, and provided that a part of a plurality of the R¹s is -COR²).

3. -The β-1,3-glucan derivative according to Claim 1 or 2,
wherein R¹ represents -COR².

4. The β-1,3-glucan derivative according to any one of Claims 1 to 3,
wherein the number of -CH₂OCOR²s per glucose unit is 0.1 or greater, wherein R² represents an aliphatic hydrocarbon group having 13 or more carbon atoms.

5. The β-1,3-glucan derivative according to any one of Claims 1 to 4,
wherein a part of R²s in the β-1,3-glucan derivative is a short-chain aliphatic hydrocarbon group having 1 to 5 carbon atoms or a phenyl group.

6. A molded body formed by molding the β-1,3-glucan derivative according to any one of Claims 1 to 5.

7. A manufacturing method of a molded body by molding the β-1,3-glucan derivative according to any one of Claims 1 to 5.

8. A preparation method of the β-1,3-glucan derivative of claim 1, comprising:
acylating of a part of hydroxyl groups in a polymer having glucan constituted of a β-1,3-glucoside bond as a main chain with a fatty acid.

9. The preparation method of a β-1,3-glucan derivative according to Claim 8,
wherein the fatty acid is a long-chain fatty acid having 13 or more carbon atoms.

10. The preparation method of a β-1,3-glucan derivative according to Claim 8, comprising:
acylating of a part of hydroxyl groups in a polymer having glucan constituted of a β-1,3-glucoside bond as a main chain with a long-chain fatty acid having 13 or more carbon atoms, and
acylating of a part of the hydroxyl groups remaining in the obtained β-1,3-glucan derivative with a short-chain fatty acid having 1 to 5 carbon atoms or benzoic acid.

11. The preparation method of a β-1,3-glucan derivative according to Claim 8,
wherein a load ratio of a chloride of the fatty acid and a glucose unit in the polymer is 1.5 to 4.0.

12. The preparation method of a β-1,3-glucan derivative according to any one of Claims 8 to 11,
wherein the polymer is paramylon isolated from microalgae which synthesize β-1,3-glucan in cells.

## Patentansprüche

1. β-1,3-Glucanderivat, wiedergegeben durch die folgende allgemeine Formel (1) als Hauptkette: 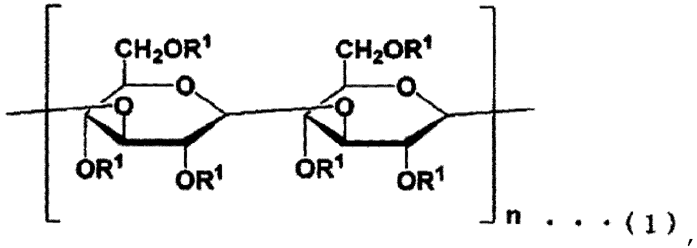
wobei jeder einer Mehrzahl von Resten R¹ unabhängig von den anderen für ein Wasserstoffatom oder -COR² steht, n für eine ganze Zahl 1 oder größer als 1 steht, R² für eine aliphatische Kohlenwasserstoffgruppe oder eine aromatische Kohlenwasserstoffgruppe steht, mit der Maßgabe, dass ein Teil der Mehrzahl der R¹-Reste für COR² steht,
wobei die Anzahl an -COR²-Resten pro Glucoseeinheit im β-1,3-Glucanderivat 0,1 oder mehr beträgt,
wobei mindestens ein Teil der R²-Reste im β-1,3-Glucanderivat für eine aliphatische Kohlenwasserstoffgruppe mit 13 oder mehr Kohlenstoffatomen steht.

2. β-1,3-Glucanderivat nach Anspruch 1, bei dem es sich um ein Polymer, wiedergegeben durch die folgende allgemeine Formel (1a), handelt: 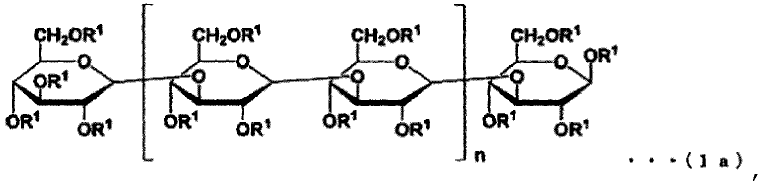 wobei jeder einer Mehrzahl von Resten R¹ unabhängig von den anderen für ein Wasserstoffatom oder -COR² steht, n für eine ganze Zahl 1 oder mehr als 1 steht, R² für eine aliphatische Kohlenwasserstoffgruppe oder eine aromatische Kohlenwasserstoffgruppe steht, mit der Maßgabe, dass ein Teil der Mehrzahl der R¹-Reste für COR² steht.

3. β-1,3-Glucanderivat nach Anspruch 1 oder 2,
wobei R¹ für -COR² steht.

4. β-1,3-Glucanderivat nach einem der Ansprüche 1 bis 3,
wobei die Anzahl an -CH₂OCOR²-Resten pro Glucoseeinheit 0,1 oder mehr beträgt, wobei R² für eine aliphatische Kohlenwasserstoffgruppe mit 13 oder mehr Kohlenstoffatomen steht.

5. β-1,3-Glucanderivat nach einem der Ansprüche 1 bis 4,
wobei es sich bei einem Teil der R²-Reste im β-1,3-Glucanderivat um eine kurzkettige aliphatische Kohlenwasserstoffgruppe mit 1 bis 5 Kohlenstoffatomen oder eine Phenylgruppe handelt.

6. Geformter Körper, gebildet durch Formen des β-1,3-Glucanderivats nach einem der Ansprüche 1 bis 5.

7. Herstellungsverfahren für einen geformten Körper durch Formen des β-1,3-Glucanderivats nach einem der Ansprüche 1 bis 5.

8. Herstellungsverfahren für das β-1,3-Glucanderivat nach Anspruch 1, umfassend:
das Acylieren eines Teils der Hydroxygruppen in einem Polymer mit Glucan mit β-1,3-Glucosidbindung als Hauptkette mit einer Fettsäure.

9. Herstellungsverfahren für ein β-1,3-Glucanderivat nach Anspruch 8,
wobei es sich bei der Fettsäure um eine langkettige Fettsäure mit 13 oder mehr Kohlenstoffatomen handelt.

10. Herstellungsverfahren für ein β-1,3-Glucanderivat nach Anspruch 8, umfassend:
das Acylieren eines Teils der Hydroxygruppen in einem Polymer mit Glucan mit einer β-1,3-Glucosidbindung als Hauptkette mit einer langkettigen Fettsäure mit 13 oder mehr Kohlenstoffatomen und
das Acylieren eines Teils der in dem erhaltenen β-1,3-Glucanderivat verbliebenen Hydroxygruppen mit einer kurzkettigen Fettsäure mit 1 bis 5 Kohlenstoffatomen oder Benzoesäure.

11. Herstellungsverfahren für ein β-1,3-Glucanderivat nach Anspruch 8,
wobei ein Beladungsverhältnis eines Chlorids der Fettsäure und einer Glucoseeinheit im Polymer 1,5 bis 4,0 beträgt.

12. Herstellungsverfahren für ein β-1,3-Glucanderivat nach einem der Ansprüche 8 bis 11,
wobei es sich bei dem Polymer um aus β-1,3-Glucan in Zellen synthetisierenden Mikroalgen isoliertes Paramylon handelt.

## Revendications

1. Dérivé de β-1,3-glucane représenté par la formule générale (1) suivante en tant que chaîne principale : 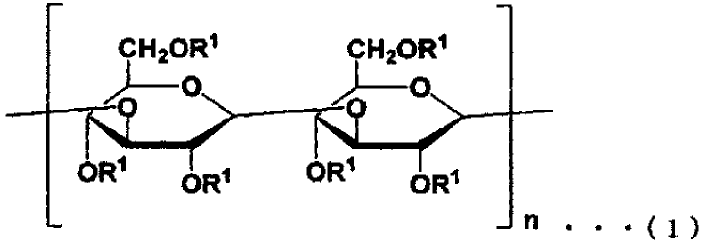
dans lequel, chacun d'une pluralité de R¹ représente indépendamment un atome d'hydrogène ou -COR², n représente un entier de 1 ou plus, R² représente un groupe hydrocarboné aliphatique ou un groupe hydrocarboné aromatique, et à condition qu'une partie d'une pluralité des R¹ soit -COR²,
dans lequel le nombre de -COR² par motif de glucose dans le dérivé de β-1,3-glucane est de 0,1 ou plus,
dans lequel au moins une partie des R² dans le dérivé de β-1,3-glucane est un groupe hydrocarboné aliphatique ayant 13 atomes de carbone ou plus.

2. Dérivé de β-1,3-glucane selon la revendication 1, qui est un polymère représenté par la formule générale (la) suivante : 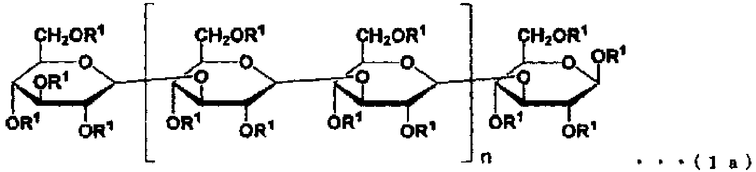 dans lequel, chacun d'une pluralité de R¹ représente indépendamment un atome d'hydrogène ou -COR², n représente un entier de 1 ou plus, R² représente un groupe hydrocarboné aliphatique ou un groupe hydrocarboné aromatique, et à condition qu'une partie d'une pluralité des R¹ soit -COR².

3. Dérivé de β-1,3-glucane selon la revendication 1 ou 2, dans lequel R¹ représente -COR².

4. Dérivé de β-1,3-glucane selon l'une quelconque des revendications 1 à 3, dans lequel le nombre de - CH₂OCOR² par motif de glucose est de 0,1 ou plus, dans lequel R² représente un groupe hydrocarboné aliphatique ayant 13 atomes de carbone ou plus.

5. Dérivé de β-1,3-glucane selon l'une quelconque des revendications 1 à 4, dans lequel une partie des R² dans le dérivé de β-1,3-glucane est un groupe hydrocarboné aliphatique à chaîne courte ayant 1 à 5 atomes de carbone ou un groupe phényle.

6. Corps moulé formé par moulage du dérivé de β-1,3-glucane selon l'une quelconque des revendications 1 à 5.

7. Procédé de fabrication d'un corps moulé par moulage du dérivé de β-1,3-glucane selon l'une quelconque des revendications 1 à 5.

8. Procédé de préparation du dérivé de β-1,3-glucane de la revendication 1, comprenant :
l'acylation d'une partie des groupes hydroxyle dans un polymère ayant un glucane constitué d'une liaison β-1,3-glucoside en tant que chaîne principale avec un acide gras.

9. Procédé de préparation d'un dérivé de β-1,3-glucane selon la revendication 8,
dans lequel l'acide gras est un acide gras à chaîne longue ayant 13 atomes de carbone ou plus.

10. Procédé de préparation d'un dérivé de β-1,3-glucane selon la revendication 8, comprenant :
l'acylation d'une partie des groupes hydroxyle dans un polymère comportant un glucane constitué d'une liaison β-1,3-glucoside en tant que chaîne principale avec un acide gras à chaîne longue ayant 13 atomes de carbone ou plus, et
l'acylation d'une partie des groupes hydroxyle restants dans le dérivé de β-1,3-glucane obtenu avec un acide gras à chaîne courte ayant 1 à 5 atomes de carbone ou l'acide benzoïque.

11. Procédé de préparation d'un dérivé de β-1,3-glucane selon la revendication 8,
dans lequel un rapport de charge d'un chlorure de l'acide gras et d'un motif de glucose dans le polymère est de 1,5 à 4,0.

12. Procédé de préparation d'un dérivé de β-1,3-glucane selon l'une quelconque des revendications 8 à 11, dans lequel le polymère est un paramylon isolé à partir de micro-algues qui synthétisent du β-1,3-glucane dans les cellules.
